Europäisches Patentamt

European Patent Office

Office européen des brevets

(19)

(11) Publication number: **0 084 449**
**B1**

# EUROPEAN PATENT SPECIFICATION

(12)

(45) Date of publication of the patent specification:
**03.07.85**

(51) Int. Cl.⁴: **H 04 N 5/76**

(21) Application number: **83300217.3**

(22) Date of filing: **17.01.83**

(54) Apparatus for recording and/or reproducing video and audio signals.

(30) Priority: **16.01.82 JP 5264/82**

(43) Date of publication of application:
**27.07.83 Bulletin 83/30**

(45) Publication of the grant of the patent:
**03.07.85 Bulletin 85/27**

(84) Designated Contracting States:
**AT DE FR GB NL**

(56) References cited:
**EP - A - 0 061 050**
**EP - A - 0 066 067**
**DE - A - 2 141 815**
**GB - A - 1 548 933**
**US - A - 4 007 482**
**US - A - 4 007 484**
**US - A - 4 322 746**

(73) Proprietor: **SONY CORPORATION,**
**7-35 Kitashinagawa 6-Chome Shinagawa-ku,**
**Tokyo 141 (JP)**

(72) Inventor: **Maruichi, Takanori c/o Patent Division, Sony**
**Corporation 7-35 Kitashinagawa-6, Shinagawa-ku Tokyo**
**(JP)**
Inventor: **Hagita, Shoji c/o Patent Division, Sony**
**Corporation 7-35 Kitashinagawa-6, Shinagawa-ku Tokyo**
**(JP)**

(74) Representative: **Cotter, Ivan John et al, D. YOUNG &**
**CO. 10 Staple Inn, London WC1V 7RD (GB)**

## Description

This invention relates to apparatus for recording and/or reproducing video and audio signals, such as may constitute (for example) a television signal.

In known video tape recorders (VTRs) for recording a colour television signal on a magnetic tape, the chrominance and luminance signal components which constitute the colour video signal are separated, and the chrominance signal component has its carrier frequency converted to a relatively low value, while the luminance component frequency modulates a relatively low value, while the luminance component frequency modulates a relatively high frequency carrier, whereupon the frequency converted chrominance signal component and the high sideband of the frequency modulated luminance signal component (hereinafter simply referred to as "the FM modulated luminance signal component") are mixed or combined to form a composite colour video signal which is recorded on a magnetic tape in successive, parallel record tracks extending obliquely or slanting with respect to the longitudinal or running direction of the magnetic tape. In such an existing system for recording a colour television signal, the audio signal thereof is recorded on the magnetic tape in record tracks which extend in the longitudinal direction, that is, the running direction of the magnetic tape, and are hereinafter referred to simply as "audio tracks".

In the above-described known recording system, the oblique or slanting tracks which are skewed relative to the tape and in which the composite colour video signal (that is, the frequency converted chrominance signal component and the frequency modulated luminance signal component) is recorded, are formed by first and second substantially diametrically opposed rotary magnetic heads both supplied with the composite colour video signal and alternately scanning the magnetic tape along a path at an angle to the longitudinal direction in which the tape is transported. In order to increase the recording density of the colour video signal on the tape and thereby increase the duration of the recording, it has been known to restrict the speed at which the magnetic tape is transported so that the successive slanting tracks scanned by the rotary magnetic heads will be closely or immediately adjacent to each other, that is, so that spaces or so-called guard bands between the adjacent slanting tracks will be eliminated. However, in such case, the problem of "crosstalk" arises in the reproducing or playback mode of the apparatus. In other words, during reproducing or playback, a transducer or head scanning one of the slanting tracks for reproducing the composite colour video signal recorded therein will also pick up or reproduce signals or crosstalk from the next adjacent tracks.

The problem of crosstalk has been substantially solved, at least in regard to the relatively high frequency recorded composite colour video signal, by providing the first and second rotary magnetic heads with different azimuth angles so that the composite colour video signal will be recorded in each slanting track by means of a magnetic head having an azimuth angle different from the azimuth angle of the head with which the composite colour video signal is recorded in the next adjacent tracks. Thereafter, during reproducing or playback, each slanting track is scanned by a rotary magnetic head having the corresponding azimuth angle with the result that a substantial azimuth loss is experienced as to the relatively high frequency components of the crosstalk from the adjacent tracks. Thus, the crosstalk in respect of the frequency modulated luminance signal component is substantially suppressed.

However, the azimuth loss effect is rather poor in regard to the low frequency band of the crosstalk, for example, in regard to the frequency converted chrominance signal component, so that other measures need to be taken for eliminating or minimising the low-frequency component of the crosstalk. For example, as disclosed in detail in our US Patent No. 4007482, crosstalk in respect of the frequency converted chrominance signal situated in a relatively low frequency band is substantially eliminated by recording the chrominance signal component with different first and second carriers in the adjacent tracks, respectively. Such first and second carriers modulated by the chrominance signal component recorded in adjacent tracks, respectively, may be distinguished from each other by their respective frequency and/or polarity characteristics so that, upon reproduction of the signal recorded in a particular track, the low frequency band of the crosstalk from the tracks next adjacent thereto can be conveniently suppressed or eliminated by reason of the different frequency and/or polarity or phase characteristics of the respective carriers.

More specifically, as disclosed in the above-identified US Patent No. 4007482, the chrominance signal component of the colour video signal to be recorded may be frequency converted so as selectively to produce first and second frequency converted signals which, when considered instantaneously, have the same carrier frequency but which differ from each other in their phase or polarity characteristics. In this case, each of the line areas or increments of one track may have recorded therein a frequency converted chrominance signal component with a carrier of constant polarity, while in the next adjacent tracks the carrier frequency converted chrominance signal component recorded therein reverses its polarity for successive line intervals. Such pattern of recording ensures that, during playback or reproduction, crosstalk effects can be minimised or eliminated. For example, during reproduction of the recorded signals, the reproduced signals of two successive line intervals may be added together by means of suitable delay means, for example, by a simple comb filter, to cancel out or at least minimise crosstalk interference signals associated with the desired reproduced signals of the two successive line intervals.

However, in the above-described system for recording and reproducing a colour television signal, each of the audio signals thereof, for example, the stereophonic left and right signals thereof, is supplied to a respective fixed head which is continuously in contact with the magnetic tape adjacent a longitudinal edge of the tape so that the stereophonic left and right sound signals are respectively recorded in audio tracks extending longitudinally along the magnetic tape.

It will be appreciated that, when high density recording of the colour video signal in successive slant tracks on the tape is effected as described above, the speed of rotation of the rotary magnetic heads is relied upon to provide the desired relatively high speed of each rotary magnetic head with respect to the magnetic tape for ensuring high quality recording of the colour video signal in the slanting or skewed tracks. However, as noted earlier, for achieving the high density recording of the colour video signal, the transport speed of the magnetic tape is necessarily quite low, for example, about 1.33 cm/s. Thus the relative velocity between the magnetic tape and the fixed heads which record the audio signals in the respective audio tracks is quite low, with the result that the quality of the audio recording is deteriorated.

In order to solve the above problem associated with the recording of the audio signals, it has been proposed that the audio signals be frequency modulated and then mixed with the composite colour video signal to provide a mixed or combined signal supplied to the rotary magnetic heads for recording by the latter in the slanting tracks. Although the foregoing proposal ensures that the relative speed of the rotary magnetic heads with respect to the magnetic tape will be sufficient to ensure that the recording quality of the audio signals will not be deleteriously affected by an inadequate head-to-tape speed, the reproduced audio signals may still be of insufficient quality in so-called "trick" reproducing modes of the VTR, for example, in the fast-forward or slow-motion reproducing mode. In such trick reproducing modes of the VTF, the speed at which the tape is advanced. differs from the normal or standard speed with which the tape is advanced during recording and in the normal reproducing mode. Since the path along which each of the rotary heads scans the tape is determined in part by the tape speed, it will be apparent that the scanning path of the rotary heads in the fast-forward or slow-motion reproducing mode will be at an angle to the direction of the slant record tracks established during the recording operation with the tape being advanced at its normal speed. Thus, in the "trick" reproducing modes, the rotary heads imperfectly scan the record tracks, particularly when situated adjacent end portions of the record tracks. Such imperfect scanning of the record tracks in the "trick" reproducing modes results in reproduction of the audio signals with noise and/or drop-outs occurring therein.

Preferred embodiments of this invention described hereinbelow provide apparatus for recording and/or reproducing video and audio signals that seeks to avoid or at least alleviate the previously described problems associated with the prior art. The preferred apparatus is capable of high quality reproducing of the audio signal or signals simultaneously with reproducing of the video signal in a "trick" reproducing mode, for example a fast-forward or slow-motion reproducing mode. The preferred apparatus can record and/or reproduce plural channels of audio signals, for example stereophonic left and right signals, while effecting the high density recording of a video signal, and without deterioration of the qualities of either the reproduced audio or video signals.

According to the invention there is provided apparatus for reproducing video and audio signals recorded as first and second mixed signals in successive alternately arranged adjacent first and second parallel record tracks, respectively, extending obliquely on a magnetic record tape, the first and second mixed signals comprising respective carriers of different frequencies frequency modulated by at least one audio signal to constitute respective FM audio signals mixed with a video signal, the apparatus comprising

magnetic head means operative to scan substantially along adjacent first and second ones of the record tracks in succession for alternately reproducing the first and second mixed signals therefrom as the tape is advanced at a normal speed in a normal reproducing mode of the apparatus, the head means scanning imperfectly along the record tracks in another reproducing mode of the apparatus in which the tape is advanced at other than the normal speed so that the mixed signals are reproduced with noise, particularly when the head means are situated adjacent end portions of the record tracks being imperfectly scanned thereby,

means for separating the FM audio signals from the respective reproduced mixed signals,

frequency demodulating means for receiving the FM audio signals separated from the reproduced mixed signals and demodulating therefrom respective alternately reproduced portions of the audio signal,

combining means for sequentially combining the alternately reproduced portions of the audio signal into a reconstituted audiosignal, and

means for removing from the reconstituted audio signal the noise which is reproduced with the mixed signals in the other reproducing mode.

In an embodiment of this invention, a control signal is provided in synchronism with the scanning of the magnetic head means across the tape, and the means for removing noise from the reconstituted audio signal includes means for generating a noise suppression signal in response to the control signal when the apparatus is in a said other or "trick" reproducing mode, such noise suppression signal having an operative level at the commencement and conclusion of the movement of the magnetic head means across the tape, and means for suppressing noise in the reconstituted audio signal in response to the operative level of the noise suppression signal.

In other embodiments of the invention, the means for removing the noise in the "trick" or other reproducing mode includes means for detecting a level of noise in the reconstituted audio signal, and noise compensating means made operative whenever the detected noise level exceeds a predetermined threshold level.

The noise compensating or suppressing means may be effective to hold levels of the reconstituted audio signal and to replace the latter with a held level when the detected noise level exceeds the predetermined threshold. Alternatively, the noise compensating or suppressing means may be effective to mute noise included in the reconstituted audio signal, for example by replacing the same with a signal of a predetermined level. Further, in response to the duration of the time in which the detected noise level exceeds the predetermined threshold, the noise compensating or suppressing means may be effective selectively to replace the noise with a held level of the reconstituted audio signal or to mute the noise by replacing the same with a signal of a predetermined level.

The invention will now be further described, by way of illustrative and non-limiting example, with reference to the accompanying drawings, in which the same reference numerals identify corresponding elements and parts throughout, and in which:

Fig. 1 is a schematic block diagram illustrating a recording circuit of a video and audio signal recording and/or reproducing apparatus according to an embodiment of this invention;

Fig. 2 is a diagram showing the frequency spectrum of frequency modulated audio signals, and to which reference is made in explaining the operation of the recording circuit of Fig. 1;

Fig. 3 is a diagram showing the frequency spectrum of the frequency modulated audio signals of Fig. 2 together with the chrominance and luminance components of a video signal, and to which reference is made in explaining operation of the recording circuit of Fig. 1;

Fig. 4 and 5 are diagrams showing the frequency spectra of mixed signals which are recorded in parallel adjacent tracks, respectively, on a magnetic tape by the recording circuit of Fig. 1;

Fig. 6 is a diagrammatic view of a section of magnetic tape, illustrating various tracks thereon in which video and audio signals are recorded by the recording circuit of Fig. 1;

Fig. 7 is a block diagram showing a reproducing circuit according to an embodiment of the present invention for reproducing video and audio signals recorded by the circuit of Fig. 1;

Fig. 8 is a diagrammatic view of a section of magnetic tape similar to that of Fig. 6, but showing the paths along which rotary heads of the reproducing circuit of Fig. 7 scan the tape in a fast-forward reproducing mode;

Fig. 9A to 9G are waveform diagrams to which reference will be made in explaining the operation of the reproducing circuit of Fig. 7;

Fig. 10A and 10B are circuit diagrams showing examples of noise compensating circuits that may be included in the reproducing circuit of Fig. 7;

Fig. 11 is a block diagram showing a reproducing circuit according to another embodiment of this invention for reproducing video and audio signals recorded by the apparatus of Fig. 1, and which is particularly suited to the reproduction of such signals in a slow-motion mode;

Fig. 11A is a fragmentary block diagram illustrating a modification of the reproducing circuit of Fig. 11;

Fig. 12 is a schematic view illustrating the positional relationship of three reproducing heads which are included in the embodiment of Fig. 11;

Fig. 13 is a diagrammatic view of a section of magnetic tape similar to Fig. 8, but showing paths along which the tape is scanned by the heads of the recording circuit of Fig. 11 in the slow-motion reproducing mode of the apparatus;

Fig. 14A to 14G are waveform diagrams to which reference is made in explaining the operation of the reproducing circuit of Fig. 11; and

Fig. 15 and 16 are block diagrams showing portions of reproducing circuits according to still other respective embodiments of the present invention for reproducing video and audio signals recorded by the circuit of Fig. 1.

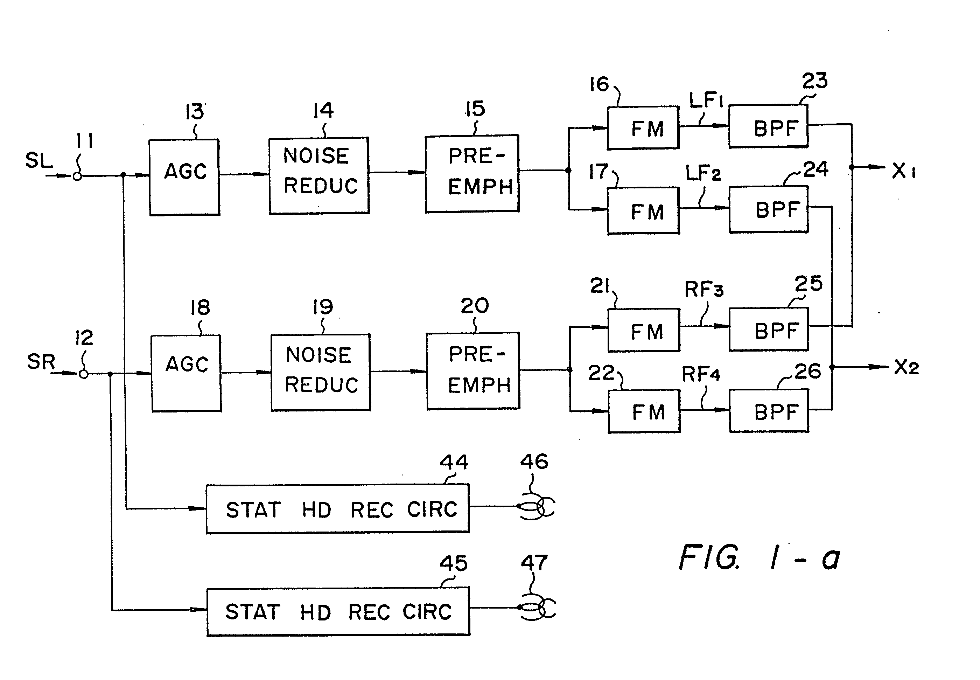

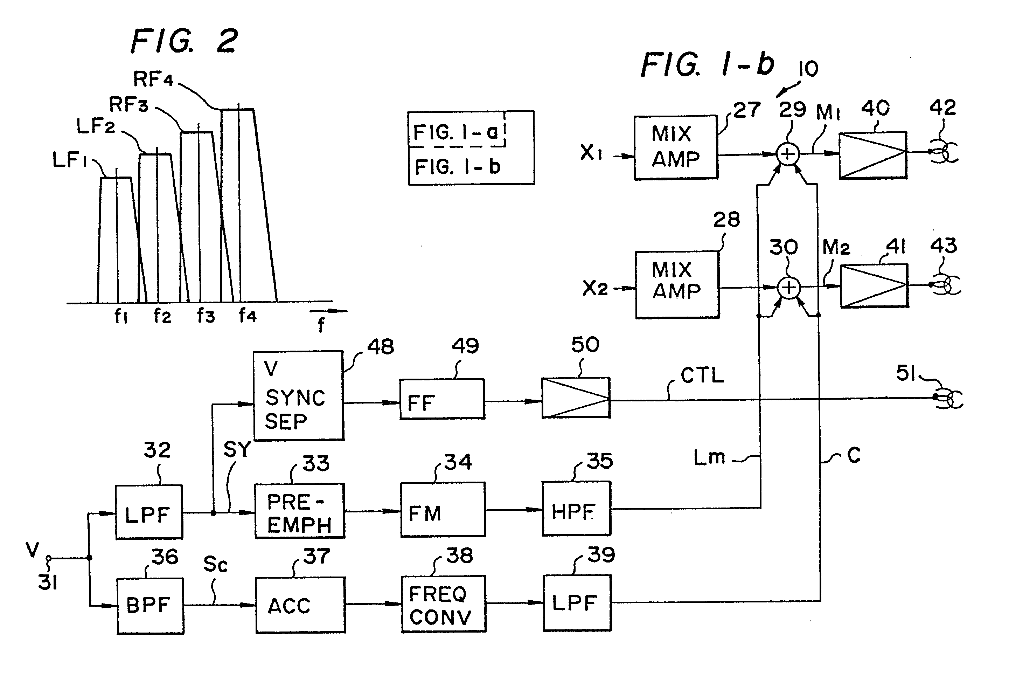

Referring to the drawings in detail, and initially to Fig. 1 thereof, a circuit, apparatus or apparatus section 10 for recording video and audio signals so as to make possible the high quality reproduction of the audio comprises audio signal input terminals 11 and 12 that receive, respectively, first and second audio signals, for example a left channel signal SL and a right channel signal SR of a stereophonic sound or audio signal. The left channel signal SL is supplied from the terminal 11 through an automatic gain control amplifying circuit 13, a noise reduction circuit 14 and a pre-emphasis circuit 15, in succession, to first and second frequency modulators (FM modulators) 16 and 17. Similarly, the right channel signal SR is supplied from the terminal 12 through an automatic gain control amplifying circuit 18, a noise reduction circuit 19 and a pre-emphasis circuit 20, in succession, to third and fourth frequency modulators (FM modulators) 21 and 22.

The first frequency modulator 16 frequency modulates a carrier having a frequency $f_1$ (for example 1.325 MHz) with the left channel signal SL so as to provide a frequency shift or deviation of the carrier of about 100 to 150 kHz, and to provide at the output of the FM modulator 16 a frequency modulated left channel signal or first FM audio signal $LF_1$. The second frequency modulator 17 similarly frequency modulates, with the left channel signal SL, a carrier having a frequency $f_2$ (for example 1.475 MHz) which is higher than the frequency $f_1$ so as to provide at the output of the frequency modulator 7 another frequency modulated left channel signal, hereinafter referred to as a second FM audio signal $LF_2$, having the same frequency shift width or deviation as the first FM audio signal $LF_1$, that is a frequency deviation of about 100 to 150 kHz, but around a different centre frequency. The third and fourth frequency modulators 21 and 22 employ the right channel signal $S_R$ to frequency modulate a carrier having a frequency $f_3$ (for example 1.625 MHz) higher than the frequency $f_2$, and a carrier having a frequency $f_4$ (for example 1.775 MHz) higher than the frequency $f_3$. The frequency modulators 21 and 22 also provide a frequency shift width or deviation of the respective carriers of about 100 to 150 kHz in response to the modulating right channel signal SR, and provide, at their respective outputs, frequency modulated right channel signals $RF_3$ and $RF_4$, hereinafter referred to as third and fourth FM audio signals, which have frequency shift or deviation bands different from each other and also different from the frequency shift or deviation bands of the first and second FM audio signals $LF_1$ and $LF_2$, respectively, as shown in Fig. 2.

In the foregoing example of the invention, the centre frequencies $f_1$, $f_2$, $f_3$ and $f_4$ of the carriers are selected so that the differences between adjacent carrier frequencies, that is, 150 kHz, will cause the beat noise component between the left FM signals $LF_1$ and $LF_2$ and the right FM signals $RF_3$ and $RF_4$, after being demodulated, to be outside of the reproduced audio signal band.

The first and second or left FM audio signals $LF_1$ and $LF_2$ and the third and fourth or right FM audio signals $RF_3$ and $RF_4$ are passed from the modulators 16, 17, 21 and 22 through corresponding bandpass filters 23, 24, 25 and 26, respectively. The levels of the FM audio signals $LF_1$, $LF_2$, $RF_3$ and $RF_4$ are suitably adjusted so as to have successively increased values, that is, so that $LF_1 < LF_2 < RF_3 < RF_4$, as shown in Fig. 2, in which the abscissa represents the frequency f and the ordinate represents the levels of the frequency modulated audio signals. It will be apparent that the signals $LF_1$, $LF_2$, $RF_3$ and $RF_4$ are sequentially arranged with the same difference or interval between their respective centre frequencies, and with the respective frequency shift bands or deviation ranges of the adjacent FM audio signals being very close to each other, or even slightly overlapping, so that the entire frequency band encompassing the FM audio signals $LF_1$, $LF_2$, $RF_3$ and $RF_4$ is relatively narrow.

The left FM signal $LF_1$, that is the first FM audio signal, from the bandpass filter 23, and the right FM signal $RF_3$, that is the third FM audio signal from the bandpass filter 25, are supplied to a mixing amplifier 27, while the left FM signal $LF_2$ or second FM audio signal from the bandpass filter 24 and the right FM signal $RF_4$ or fourth FM audio signal from the bandpass filter 26 are supplied to a mixing amplifier 28. The mixed output of the mixing amplifier 27, that is the first FM audio signal $LF_1$ combined with the third FM audio signal $RF_3$, is applied to an adder or mixer 29 to be mixed therein with a composite video signal composed of a frequency modulated luminance signal $L_m$ and a chrominance signal C, so as to provide therefrom a first mixed audio and video signal $M_1$ at an output of the mixer 29. Similarly, the output of the mixing amplifier 28, that is the second FM audio signal $LF_2$ combined with the fourth FM au-

dio signal $RF_4$, is supplied to an adder or mixer 30 so as to be mixed or combined in the latter with the frequency modulated luminance signal $L_m$ and the chrominance signal C constituting the composite colour video signal for providing, at the output of the mixer 30, a second mixed audio and video signal $M_2$.

The frequency modulated luminance signal $L_m$ and the chrominance signal C may be provided by a simplified video signal processing circuit shown in Fig. 1 as comprising an input terminal 31 which receives a colour video signal V containing both luminance and chrominance components. A low pass filter 32 receives the colour video signal V from the terminal 31 and separates therefrom the luminance component $S_y$, which is passed through a pre-emphasis circuit 33 to a frequency modulator 34 in which a carrier with a selected centre frequency is frequency modulated by the luminance component to provide the frequency modulated luminance component $L_m$, which is passed through a high pass filter 35 to each of the adders 29 and 30. The colour video signal V applied to the terminal 31 is also supplied from the terminal 31 to a bandpass filter 36 which separates the chrominance component $S_c$ from the colour video signal and passes the chrominance component through an automatic colour control circuit 37 to a frequency converter 38 in which the chrominance component is converted to a frequency band lower than that of the high sideband of the frequency modulated luminance signal $L_m$ supplied to the adders 29 and 30. The resulting frequency converted chrominance component C is supplied through a low pass filter 39 to additional inputs of the adders 29 and 30 so as to be combined therein with the frequency modulated luminance signal $L_m$ and with the outputs of the mixer amplifiers 27 and 28 for providing the mixed audio and video signals $M_1$ and $M_2$, respectively. Such mixed signals $M_1$ and $M_2$ are supplied through recording amplifiers 40 and 41 to magnetic heads 42 and 43, respectively, which preferably have different azimuth angles and which, in a recording mode of the apparatus 10, are operative to record the mixed signals $M_1$ and $M_2$ in parallel adjacent record tracks on a magnetic record medium.

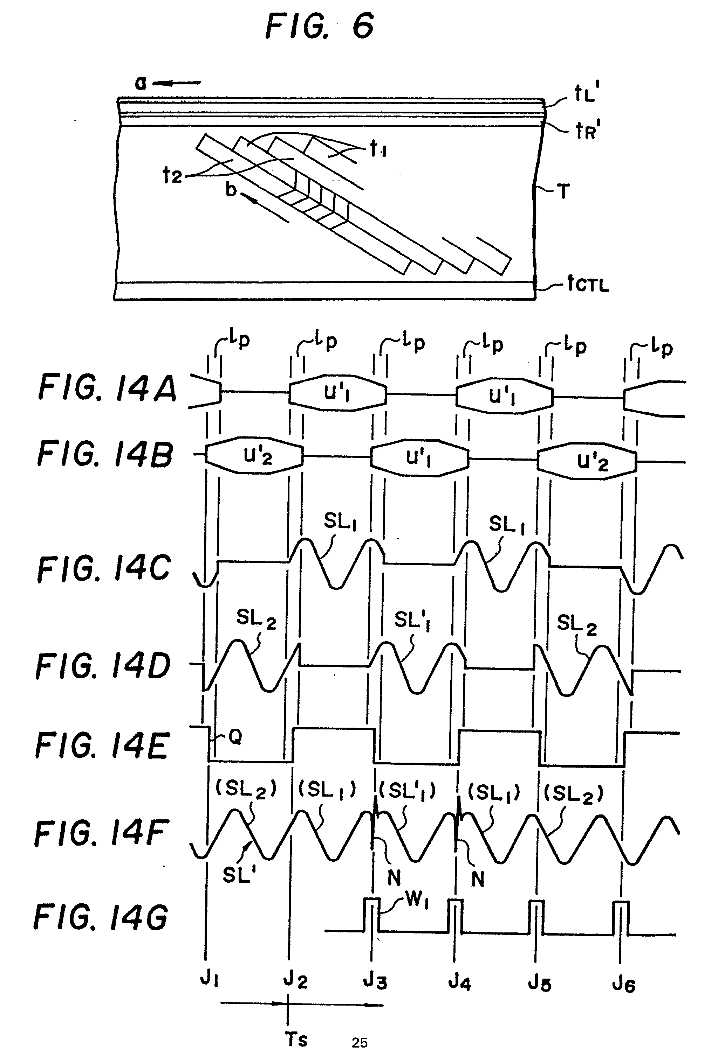

When the invention is applied to a helical scan video tape recorder (VTR), the magnetic record medium is in the form of a magnetic tape which is suitably guided in a helical path about a substantial portion of the periphery of a guide drum (not shown), and the magnetic heads 42 and 43 are diametrically opposed and rotatably mounted in association with the guide drum for movement in a circular path coinciding with the drum periphery. In that case, during operation of the apparatus 10 in the recording mode, the heads 42 and 43 are rotated alternately to move obliquely across the magnetic tape T, as indicated by an arrow b in Fig. 6, while the tape T is suitably driven at a normal or standard speed in its longitudinal direction indicated by an arrow a, whereby the head 42 scans alternating slanting or oblique tracks $t_1$

while the head 43 scans the remaining alternating tracks $t_2$. Thus, if one considers any of the next adjacent parallel slanting tracks on the tape T, such tracks $t_1$ and $t_2$ are respectively scanned by the heads 42 and 43. Usually, but not necessarily, each of the tracks $t_1$ and $t_2$ has recorded therein the video signal information corresponding to a respective field interval of the video signal. Since the heads 42 and 43 have air gaps arranged at substantially different azimuth angles with respect to the plane of rotation of the heads 42 and 43, each of the heads, when recording the respective mixed audio and video signals $M_1$ or $M_2$ in the respective tracks on the tape T, effects magnetisation of magnetic domains in the magnetic coating of the tape in what would appear to be, if such domains were visible, a series of parallel lines or stripes extending across the respective track and each having an orientation that corresponds to the azimuth angle of the respective head. Furthermore, during recording, the standard or normal speed of advancement of the tape T in the direction a is preferably selected so that there will be no guard bands or unrecorded areas between the adjacent tracks $t_1$ and $t_2$, thereby to increase the recording density of the colour video signal on the tape.

In reproducing the mixed signals $M_1$ and $M_2$ recorded in the adjacent tracks $t_1$ and $t_2$ by means of the magnetic heads 42 and 43, respectively, or by other reproducing or playback heads having corresponding azimuth angles and alternately scanning the tracks $t_1$ and $t_2$, as each head scans the respective track, the well-known azimuth loss results in attenuation of the signals reproduced by that head from the adjacent tracks. Since such azimuth loss is generally proportional to the frequency of the signal, azimuth loss is relatively ineffective to decrease or eliminate interference due to crosstalk from the low frequency or frequency converted chrominance component of the recorded composite colour video signal. Thus, although the apparatus 10 of Fig. 1 is shown, for the sake of simplicity, merely to frequency convert the chrominance component of the incoming colour signal V for providing a relatively low frequency band for the chrominance component C of the composite colour video signal included in the mixed signals $M_1$ and $M_2$, the recording apparatus may be of the type disclosed in our previously-mentioned US Patent No. 4007482, or in our US Patent No. 4007484 in which interference or crosstalk between low frequency signals recorded in adjacent tracks is reduced or eliminated by recording the chrominance component with different first and second carriers in the adjacent tracks $t_1$ and $t_2$. Such first and second carriers modulated by the chrominance component $S_c$ for recording in adjacent tracks, respectively, may be distinguished from each other by their respective frequency and/or polarity characteristics so that, upon reproduction of the signal recorded in a particular track $t_1$ or $t_2$, the low frequency band of the crosstalk from the tracks $t_2$ or $t_1$, respectively, adjacent thereto can be conveniently suppressed or eliminated by reason of the different frequency and/or polarity or phase characteristics of the respective carriers.

Referring again to Fig. 1, it will be seen that the apparatus 10 includes stationary head recording circuits 44 and 45 through which the left channel signal SL and the right channel signal SR are supplied from the input terminals 11 and 12 to fixed magnetic heads 46 and 47, respectively, disposed adjacent the tape T and being operative, in the recording mode of the apparatus 10, to record the left channel signal SL and the right channel signal SR in respective longitudinal tracks $t_L'$ and $t_R'$ extending along a longitudinal edge of the tape T (Fig. 6), as in a conventional VTR.

In order to permit the alternating slanting or oblique record tracks $t_1$ and $t_2$ to be distinguished from each other when reproducing the signals recorded therein, the recording apparatus 10 may include a vertical sync separator 48 which separates the vertical synchronising signals from the luminance component $S_Y$ passing through the low pass filter 32. The separated vertical synchronising signals are applied to a flip-flop 49 which provides control signals CTL occurring in correspondence with the recording of colour video signals in alternating or every other one of the tracks $t_1$ and $t_2$. The control signals from the flip-flop 49 are applied through an amplifier 50 to a fixed head 51 which is disposed adjacent the longitudinal edge portion of the tape T remote from the audio tracks $t_L'$ and $t_R'$. Thus, as the tape T is longitudinally advanced during a recording operation of the apparatus 10, the head 51 records control signals CTL in a longitudinal track $t_{CTL}$ shown in Fig. 6 for identifying the slanting tracks $t_1$ and $t_2$ in which signals are recorded by the rotary heads 42 and 43, respectively.

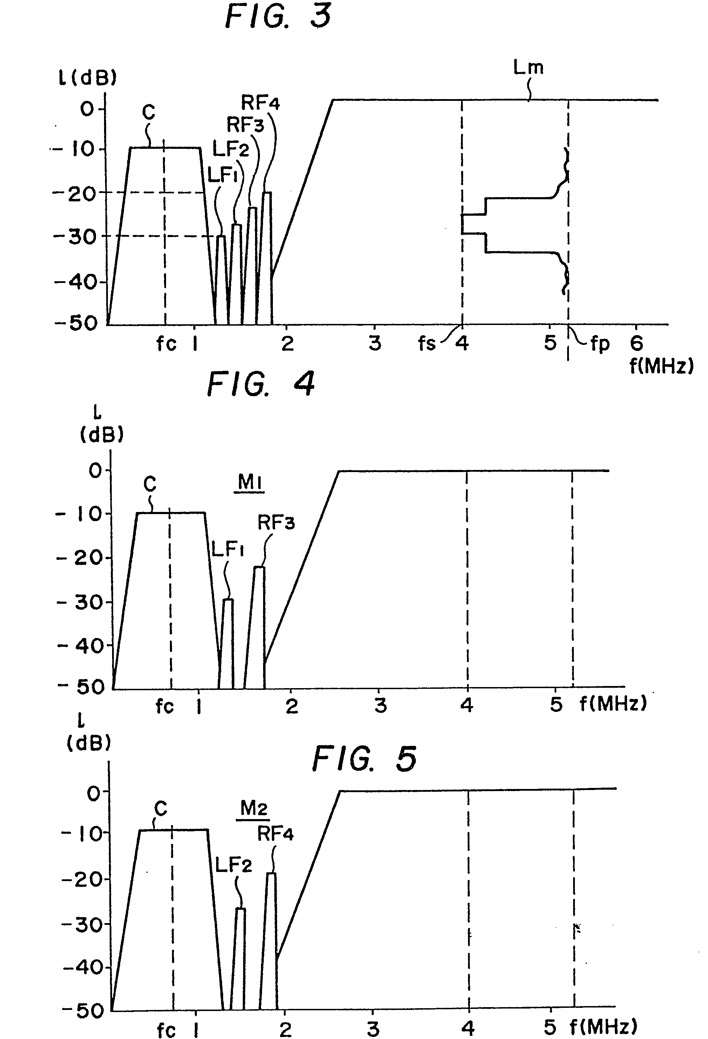

Referring now to Fig. 3, it will be seen that the frequency $f_c$ of the colour sub-carrier of the frequency converted chrominance signal C has a sufficiently low value (for example 688 kHz) that the resulting low frequency band of the chrominance signal C will be below the band of the first FM audio signal $LF_1$ having the previously-mentioned centre frequency $f_1$ of 1.325 MHz. Further, the centre frequency of the carrier to be modulated by the luminance component $S_y$ in the frequency modulator 34 is selected (for example 4.6 MHz) and the degree of modulation is selected so that, in the resulting frequency modulated luminance signal $L_m$, the sync signal of the luminance component corresponds to a frequency $f_s$ (for example 4.0 MHz) which is substantially higher than the centre frequency $f_4$ of the FM audio signal $RF_4$, while the white peak or maximum amplitude of the luminance component corresponds to a frequency $f_p$ (for example 5.2 MHz) which is higher than the frequency $f_s$ by a predetermined amount, that is, by 1.2 MHz in the example given. It will be appreciated from Fig. 3, that, with such examplary values given for the colour sub-carrier frequency $f_c$ of the frequency converted chrominance signal C, and for the frequencies $f_s$ and $f_p$ of the frequency modulated luminance signal $L_m$, the resulting composite colour video signal to be recorded in

the tracks $t_1$ and $t_2$ has a gap or space in its spectrum between the frequency converted chrominance signal C and the frequency modulated luminance signal $L_m$ for substantially accommodating the FM audio signals $LF_1$, $LF_2$, $RF_3$ and $RF_4$.

Further, as shown in Fig. 3, the level of the frequency converted chrominance signal C is desirably selected to be larger than the levels of all of the FM audio signals $LF_1$, $LF_2$, $RF_3$ and $RF_4$, and the level of the frequency modulated luminance signal $L_m$ is selected to be larger than the level of the chrominance signal C. It will be appreciated that the sequentially arranged left FM signals $LF_1$ and $LF_2$ and right FM signals $RF_3$ and $RF_4$ are located close to one another in the space or gap between the bands of the frequency converted chrominance signal C and the frequency modulated luminance signal $L_m$ so as to minimise as much as possible the gap that needs to be provided between the signals C and $L_m$ of the composite video signal and suppression of the latter required for accommodating the FM audio signals $LF_1$, $LF_2$, $RF_3$ and $RF_4$.

As noted earlier, the first mixed signal $M_1$, in which the frequency converted chrominance signal C and the frequency modulated luminance signal $L_m$ are mixed with the left FM signal $LF_1$ and right FM signal $RF_3$, is supplied from the adder 29 through the amplifier 40 to the rotary magnetic head 42. The second mixed signal $M_2$, in which the frequency converted chrominance signal C and the frequency modulated luminance signal $L_m$ are mixed with the left FM signal $LF_2$ and the right FM signal $RF_4$, is supplied from the adder 30 through the amplifier 41 to the rotary magnetic head 43. These rotary magnetic heads 42 and 43, which have different azimuth angles, alternately form or scan the oblique or slanting tracks $t_1$ and $t_2$, respectively, with no guard bands therebetween, whereby the first and second mixed signals $M_1$ and $M_2$ are alternately recorded in such tracks $t_1$ and $t_2$. The first and second mixed signals $M_1$ and $M_2$ alternately recorded in the tracks $t_1$ and $t_2$ have the frequency spectra shown in Fig. 4 and 5, respectively. It will be appreciated therefrom that, in this illustrated embodiment of this invention, the FM audio signals recorded in each track $t_1$, that is, the left FM signal $LF_1$ and the right FM signal $RF_3$, do not have adjacent frequency bands. Similarly, the FM audio signals recorded in each track $t_2$, that is, the left FM signal $LF_2$ and the right FM signal $RF_4$, do not have adjacent frequency bands. Further, it will be appreciated that the FM audio signals $LF_1$ and $RF_3$ are recorded in each track $t_1$ by the rotary head 46 with an azimuth angle different from that with which the head 47 records the FM audio signals $LF_2$ and $RF_4$ in each adjacent track $t_2$. Furthermore, the carrier frequencies $f_1$ and $f_3$ and the carrier frequencies $f_2$ and $f_4$ of the FM audio signals recorded in the adjacent slanting tracks $t_1$ and $t_2$, respectively, are not coincident with each other.

At the same time that the FM audio signals contained in the mixed signals $M_1$ and $M_2$ are being recorded along with the composite colour video signal in the slanting tracks $t_1$ and $t_2$ by means of the rotary heads 42 and 43, the apparatus 10 may also record the left and right channel signals SL and SR in the longitudinal tracks $t_L'$ and $t_R'$ by means of the fixed heads 46 and 47 so that the tape T thus recorded can be played back or is compatible with a conventional VTF in which only fixed heads are provided for reproducing the recorded audio signals.

With regard to the FM audio signals recorded with the frequency converted chrominance signal C and the frequency modulated luminance signal $L_m$ by the rotary magnetic heads 42 and 43 in the slanting tracks $t_1$ and $t_2$, it will be seen that, since the relative speed of the rotary heads 42 and 43 with respect to the magnetic tape T is selected to be sufficiently high for recording the video signal, such high relative speed ensures high quality recording of the audio signals, such as the stereophonic left channel signal and right channel signal, while using a narrow frequency band for the corresponding FM audio signals $LF_1$, $LF_2$, $RF_3$ and $RF_4$ for preventing suppression of the frequency band of the composite colour video signal.

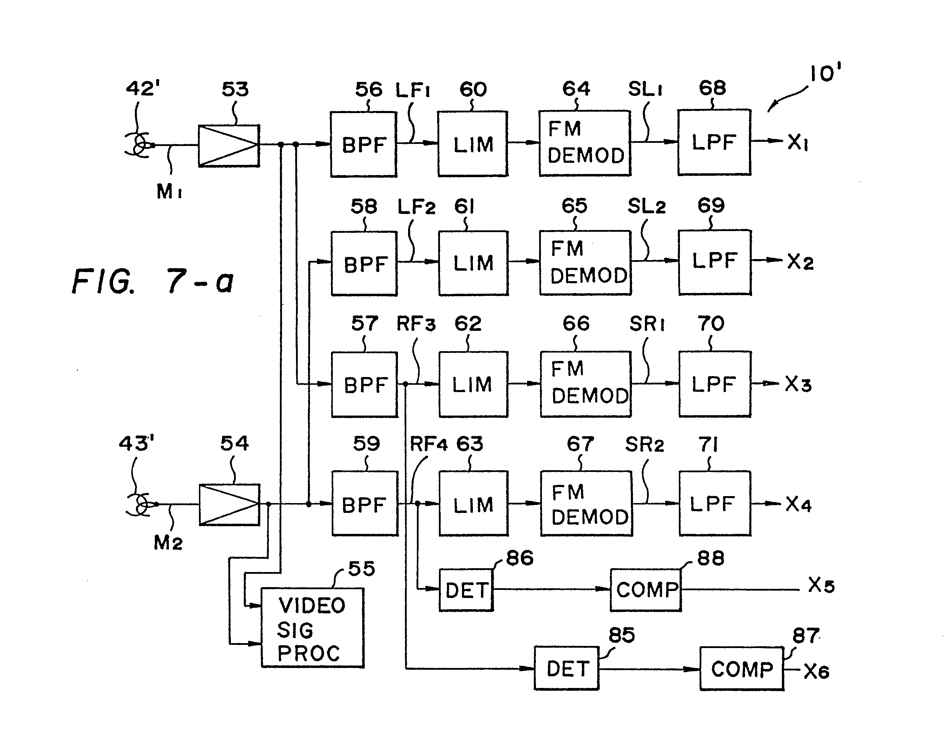

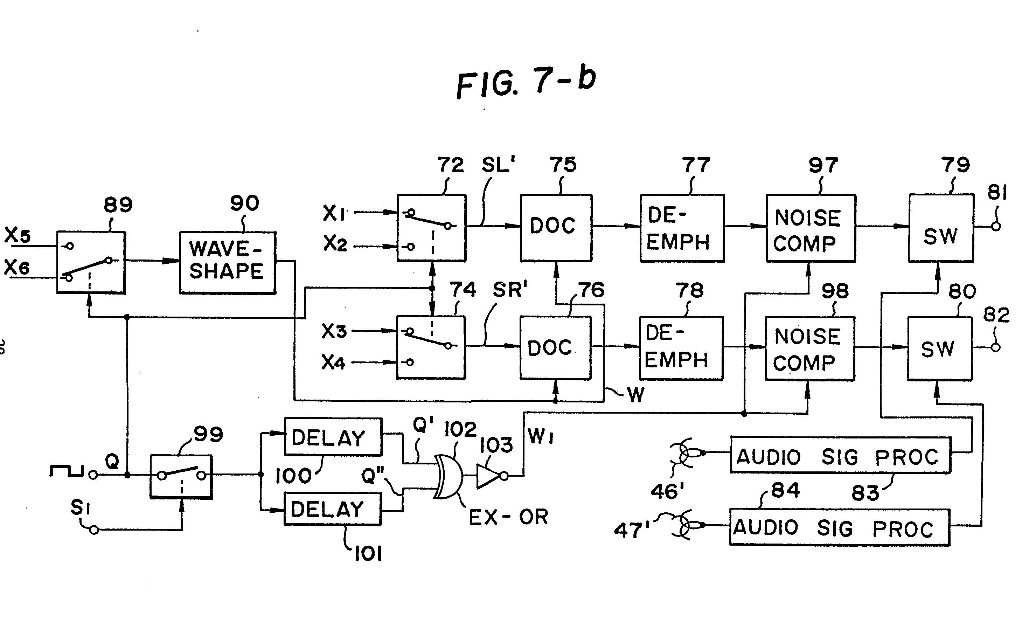

When the composite colour video signal and the FM audio signals are recorded together in the slanting tracks $t_1$ and $t_2$ in the manner described above, the corresponding audio signals, for example, the left and right channel signals, can be reproduced with good separation from each other and with minimised interference due to crosstalk from adjacent tracks. A way in which such advantageous reproduction can be effected will now be described with reference to Fig. 7 in which a reproducing apparatus, circuit or section 10' of a recording and reproducing apparatus is shown to include rotary magnetic heads 42' and 43', corresponding to the heads 42 and 43, respectively, of the recording section or apparatus 10, that are operative in a normal reproducing mode alternately to scan the slanting tracks $t_1$ and $t_2$ formed on the magnetic tape T by the recording apparatus or section. The movements of the rotary heads 42' and 43' are suitably controlled, for example, by a known servo system (not shown), so that, in the normal reproducing mode in which the tape T is advanced at the normal or standard speed, the head 42' scans along a slanting track $t_1$ during one field and, during the next field, the other rotary magnetic head 43' scans along the next adjacent slanting track $t_2$. Since the head 42' has an azimuth angle corresponding to that of the head 42 with which the mixed signal $M_1$ was recorded in the slanting track $t_1$, and the head 43' has an azimuth angle corresponding to that of the magnetic head 43 with which the mixed audio and video signal $M_2$ was recorded in the slanting track $t_2$, the magnetic head 42' mainly reproduces the first mixed signal $M_1$ from the scanned track $t_1$ with the frequency spectrum shown in Fig. 4, and the second mixed signal $M_2$ having the frequency spectrum shown in Fig. 5 is mixed therewith only as a crosstalk component from the adjacent tracks $t_2$. On the other hand, the magnetic head 43' mainly reproduces the second mixed signal $M_2$, having the frequency spectrum of Fig. 5, from the track $t_2$ being scanned, while the first mixed signal $M_1$ is mixed therewith only as a crosstalk component from the adjacent tracks $t_1$. The outputs from the heads 42' and 43' are respectively supplied through reproducing amplifiers 53 and 54 to a video signal processing circuit 55 which, in correspondence to the simplified video signal processing circuit in the recording apparatus or circuit 10 of Fig. 1, is effective to separate the frequency converted chrominance signal C and the frequency modulated luminance signal $L_m$ from each of the mixed signals $M_1$ and $M_2$ and then to reconvert the chrominance signal to its original frequency band and to demodulate the frequency modulated luminance signal.

Of course, if the chrominance signal has been recorded with different first and second carriers in the adjacent tracks $t_1$ and $t_2$, for example in the manner mentioned above with reference to US Patents Nos. 4007482 and 4007484, then the video signal processing circuit 55 of the reproducing circuit 10' may be arranged as shown in either of those patents for suppressing or eliminating the low frequency band of crosstalk between the tracks $t_1$ and $t_2$ by reason of the different frequency and/or polarity or phase characteristics of the respective carriers.

The output of the head 42', as obtained from the reproducing amplifier 53, is also supplied to bandpass filters 56 and 57 which respectively pass therethrough the left FM signal $LF_1$ and right FM signal $RF_3$. Although such left FM signal $LF_1$ and right FM signal $RF_3$ in the output from the head 42' are reproduced from the same slanting track $t_1$, the frequency bands of such signals $LF_1$ and $RF_3$ are spaced from each other, that is, are not immediately adjacent, as is apparent from Fig. 4, so that such FM audio signals $LF_1$ and $RF_3$ can be satisfactorily separated from each other by the bandpass filters 56 and 57. Thus, in the normal reproducing mode, the bandpass filters 56 and 57 deliver the left FM signal $LF_1$ and the right FM signal $RF_3$, respectively, without mixing therewith any substantial crosstalk component of the other. Similarly, the output of the head 43', as obtained from the reproducing amplifier 54, is supplied to bandpass filters 58 and 59 which respectively permit the left FM signal $LF_2$ and the right FM signal $RF_4$ to pass therethrough. Although such FM audio signals $LF_2$ and $RF_4$ in the output from the head 43' are also reproduced from the same slanting track $t_2$, their frequency bands are also spaced from each other, as shown in Fig. 5, and such signals can effectively be separated from each other by the bandpass filters 58 and 59. Thus, in the normal reproducing mode, the bandpass filters 58 and 59 provide, at their outputs, the left FM signal $LF_2$ and the right FM signal $RF_4$, respectively, with each such signal being essentially free of any crosstalk component from the other.

The left FM signals $LF_1$ and $LF_2$ and the right FM signals $RF_3$ and $RF_4$ obtained from the bandpass filters 56 and 58 and the bandpass filters 57 and 59, respectively, are supplied through amplitude limiters 60, 61, 62 and 63, respectively, to corresponding FM demodulators 64, 65, 66 and 67. It will be appreciated that, during the reproduction of the fields of the video signal recorded in the slanting tracks $t_1$, portions of the demodulated, reproduced left and right channel signals $SL_1$ and $SR_1$, respectively, appear at the outputs of the demodulators 64 and 66, respectively. On the other hand, during the reproduction of the fields of the video signal recorded in the tracks $t_2$, portions of the demodulated reproduced left and right channel signals $SL_2$ and $SR_2$, respectively, appear at the outputs of the frequency demodulators 65 and 67. Such outputs of the frequency demodulators 64, 65, 66 and 67 are passed through low pass filters 68, 69, 70 and 71, respectively, which, for example, have cut-off frequencies of less than about 150 kHz so as to pass the audio signal band while removing from the audio signals supplied thereto any beat noises that may occur in the outputs of the frequency demodulators 64, 65, 66 and 67 due to the existence of crosstalk components in the signals reproduced by the heads 42' and 43'. More particularly, in the previously described recording apparatus or section 10, the carrier frequencies $f_1$, $f_2$, $f_3$ and $f_4$ of the FM audio signals $LF_1$, $LF_2$, $RF_3$ and $RF_4$, respectively, have been selected so that the difference between the adjacent carrier frequencies, for example 150 kHz, and therefore the frequency of the described beat noise, will be outside of the signal band passed by the low pass filters 68, 69, 70 and 71. Thus, any beat noises appearing at the outputs of the frequency demodulators 64, 65, 66 and 67 are removed by the filters 68, 69, 70 and 71, respectively.

In view of the above, in the normal reproducing mode, portions of the reproduced left channel signal SL, without any components of the right channel signal SR or any beat noise mixed therewith, are provided at the outputs of the low pass filters 68 and 69 in alternating fields of the video signal. Similarly, portions of the reproduced right channel signal SR, without any components of the left channel signal SL or any beat noise mixed therewith, are provided at the outputs of the low pass filters 70 and 71 during alternating fields of the reproduced video signal.

The portions $SL_1$ and $SL_2$ of the reproduced left channel signal obtained from the low pass filters 68 and 69, as described above, are alternately passed through a switch circuit 72 changed over at each video field period in response to a suitable control signal Q which, for example, may be obtained from a signal generator driven with the rotary heads 42' and 43', as is conventional. Thus, a reconstituted left channel signal SL' is obtained from the output of the switch circuit 72. Similarly, the portions of the right channel signal SR obtained from the low pass filters 70 and 71 in alternating fields of the video signal are alternately passed through a switch circuit 74 under the control of the switch control signal Q so that a reconstituted right channel signal SR' is obtained at the output of the switch circuit 74. Such reconstituted left and right channel audio signals SL' and SR' obtained from the outputs of the switch circuits 72 and 74, and which are substantially continuous in the normal reproducing mode, are passed through drop-out compensating circuits 75 and 76, respectively, for cancelling or removing from the respective signals noises caused by drop-outs occurring at random in the outputs from the magnetic heads 42' and 43', and then through de-emphasis circuits 77 and 78, respectively, which are complementary to the pre-emphasis circuits 15 and 20 in the recording circuit 10 and include low pass filters (not shown). The resulting left and right channel audio output signals are applied through switching circuits 79 and 80, respectively, to audio output terminals 81 and 82. The switching circuits 79 and 80 are provided for selectively supplying to the respective audio output terminals 81 and 82 either reconstituted left and right channel audio signals SL' and SR', as reproduced from the slanting tracks $t_1$ and $t_2$ by the rotary heads 42' and 43', as described above, or the left and right channel signals reproduced by fixed heads 46' and 47' (Fig. 7) from the conventional longitudinal audio tracks $t_L'$ and $t_R'$ on the tape and which are supplied to switching circuits 79 and 80 through conventional audio signal processing circuits 83 and 84, respectively.

As earlier noted, the drop-out compensating circuits 75 and 76 are provided to compensate for those drop-outs that occur at random in the respective reconstituted audio signal SL' and SR', respectively, during the scanning of the record tracks $t_1$ and $t_2$ by the heads 42' and 43', for example as a result of dust on the tape or an imperfection in the magnetic coating or recording. Such drop-outs occurring at random within the record tracks $t_1$ and $t_2$ are of short durations, for example of 10 to 100 microseconds. In the reproducing circuit 10' of Fig. 7, the random drop-outs of short duration are detected with respect to the FM audio signals $RF_3$ and $RF_4$ separated from the mixed signals $M_1$ and $M_2$ reproduced by the heads 42' and 43'. More particularly, level detectors 85 and 86 are connected to the outputs of the bandpass filters 57 and 59, respectively, to detect the levels of the separated FM audio signals $RF_3$ and $RF_4$. The detected signal levels are applied from the detectors 85 and 86 to comparators 87 and 88, respectively, in which the detected signal levels are compared with reference levels. The outputs of the comparators 87 and 88 are connected to respective inputs of a switch circuit 89 which is operated by the switch control signal Q selectively to supply the compared output of the comparator 87 or the comparator 88 to a wave shaper 90 which is intended to provide a suitably shaped pulse or control signal W for operating the drop-out compensating circuits 75 and 76.

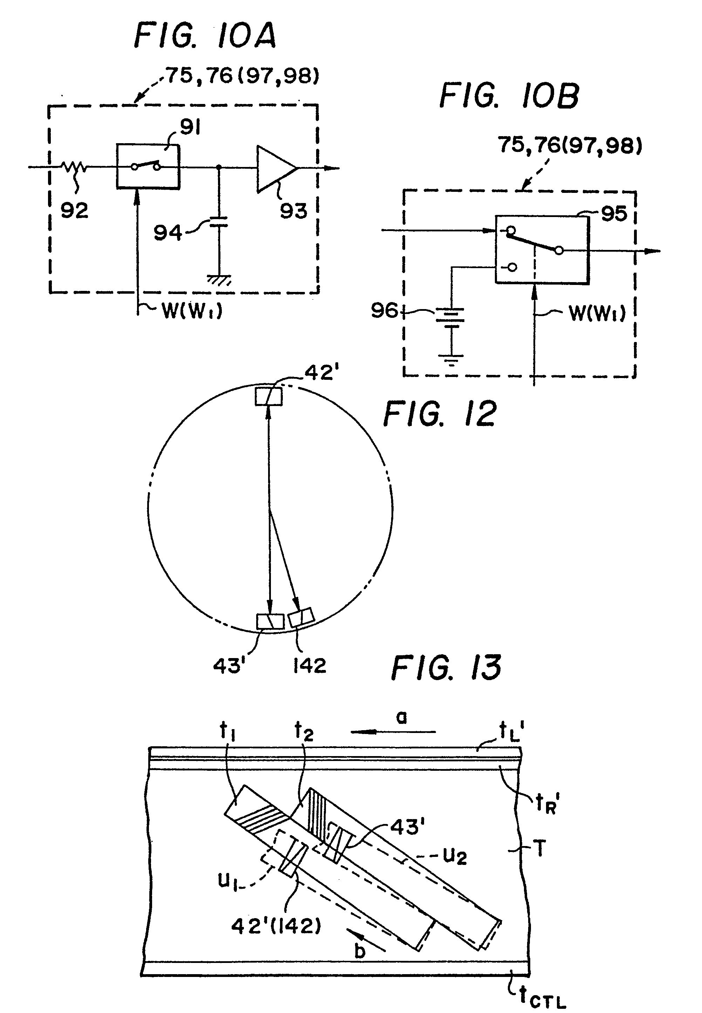

As shown in Fig. 10A, each of the drop-out compensating circuits 75 and 76 may include a normally closed switch circuit 91 connected between a resistor 92 and an amplifier 93 in a series circuit through which the respective reconstituted audio signal SL' or SR' is transmitted to the de-emphasis circuit 77 or 78. A capacitor 94 is connected, at one end, to the junction between the switch circuit 91 and the amplifier 93 and, at its other end, to ground. So long as the switch circuit 91 is closed, the respective audio signal SL' or SR' is transmitted without change through the drop-out compensating circuit 75 or 76 and the capacitor 94 is charged to a level corresponding to that of the reconstituted audio signal. However, when the switch circuit 91 is opened in response to a control pulse W from the wave shaper 90, the voltage level of the charge on the capacitor 94 is then applied through the amplifier 93 to compensate for a drop-out in the respective reconstituted audio signal SL' or SR'. It will be appreciated that the switch control signal Q maintains the switch circuit 89 in the position illustrated in Fig. 7 during the scanning by the head 42' of a track $t_1$ on the tape, at which time the switch circuits 72 and 74 are also positioned as shown for supplying to the drop-out compensating circuits 75 and 76 the demodulated audio signal portions $SL_1$ and $SR_1$ obtained from the FM audio signals $LF_1$ and $RF_3$ included in the reproduced mixed signal $M_1$. Thus, in the event of a drop-out occurring at random in the reproduced mixed signal $M_1$ and sensed by the detector 85 and comparator 87, the resulting control pulse W from the wave shaper 90 causes the drop-out compensating circuits 75 and 76 to replace the drop-outs in the reconstituted signals SL' and SR' by the immediately preceding or held levels of the demodulated signal portions $SL_1$ and $SR_1$, respectively. On the other hand, if a drop-out occurs at random in the mixed signal $M_2$ during the reproducing of the signal from a track $t_2$ by the head 43', the sensing of such drop-out in the FM audio signal $RF_4$ by the detector 86 and comparator 88 is communicated through the then changed-over switch circuit 89 to the wave shaper 90. At such time, the switch circuits 72 and 74 are also changed over from the position shown in Fig. 7 so that the pulse W from the wave shaper 90 causes the drop-out compensating circuits 75 and 76 to replace the drop-outs in the reconstituted audio signals SL' and SR' by the immediately preceding or held levels of the demodulated audio signal portions $SL_2$ and $SR_2$, respectively, derived from the FM audio signals $LF_2$ and $RF_4$ included in the reproduced mixed signal $M_2$.

In the circuit arrangement for each of drop-out compensating circuits 75 and 76 as described above with reference to Fig. 10A, a randomly occurring drop-out in the reconstituted audio signal SL' or SR' is compensated or replaced by a previously held level of the respective reconstituted audio signal. However, as shown in Fig. 10B, each of the drop-out compensating circuits 75 and 76 may be constituted simply by a switching circuit 95 which is normally in the position shown in the drawing for supplying the respective reconstituted audio signal SL' or SR' from the output of the switch circuit 72 or 74 to the respective de-emphasis circuit 77 or 78. However, when the wave shaper 90 provides a pulse W in response to detection of a drop-out in the respective reproduced mixed signal $M_1$ or $M_2$, the switch circuit 95 is changed over from the illustrated position for replacing the sensed drop-out with a predetermined signal level, as from a voltage source 96.

It will be seen that, in the reproducing apparatus or section 10', the switch circuits 72 and 74 are located after the frequency demodulators 64 and 65 and the frequency demodulators 66 and 67, respectively. Thus, the switch circuits 72 and 74 each act to combine or join successive portions $SL_1$ and $SL_2$ or $SR_1$ and $SR_2$ of the demodulated relatively low frequency signals. At least in the normal reproducing mode in which each of the rotary heads 42' and 43' closely follows a record track $t_1$ or $t_2$ when reproducing a mixed signal $M_1$ or $M_2$ therefrom, the relatively low frequency or audio signal portions demodulated from the mixed signals $M_1$ and $M_2$ recorded in the tracks $t_1$ and $t_2$ can be combined relatively easily without large junction errors even though the audio signals do not include blanking intervals as in the case of the video signals. Further, such junction errors as do occur, for example due to angular deviation of the rotary heads 42' and 43' from the desired diametrically opposed relation thereof, involve an abrupt or high frequency change in the reconstituted signal SL' or SR', which is substantially eliminated by the previously mentioned low pass filter conventionally included in the de-emphasis circuit 77 or 78.

However, the foregoing measures are not sufficient to achieve high-quality reproduction of the audio signals recorded with the video signal in the slanting tracks on the tape, particularly in so-called "trick" reproducing modes of the apparatus, such as fast-forward or slow-motion reproducing modes, in which the speed of advancement of the tape is different from the tape speed for recording and for the normal reproducing mode.

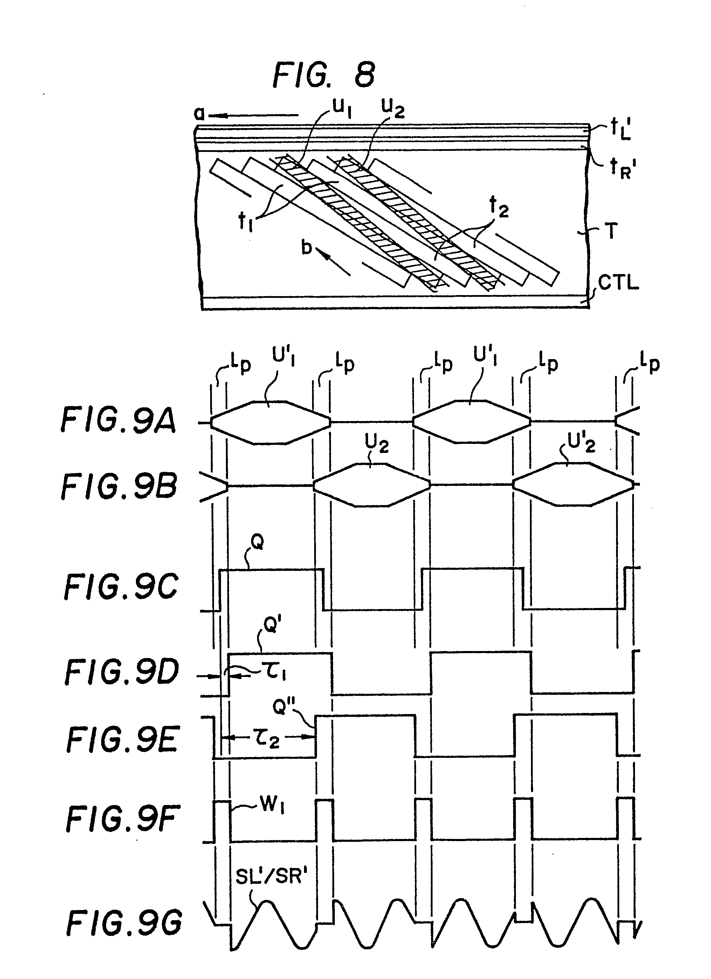

Since the path along which each of the rotary heads 42' and 43' scans the tape T is determined in part by the speed of advancement of the tape indicated by the arrow a in Fig. 8, it will be apparent that the scanning paths of the rotary heads 42' and 43' indicated by the shaded regions $u_1$ and $u_2$ in Fig. 8 for a fast-forward reproducing mode will be at an angle to the direction of the slanting record tracks $t_1$ and $t_2$ established during the recording operation in which the tape is advanced at its normal speed. Thus, in a fast-forward reproducing mode, for example, in which the tape T is advanced at a speed twice that used for recording or for the normal reproducing mode, the rotary heads 42' and 43' will scan the respective tracks $t_1$ and $t_2$ across the full width of the tracks only for portions of the lengths of such tracks and will otherwise imperfectly scan the respective record tracks. For example, by suitable servo-control of the advancement of the tape T in the direction of the arrow a relative to the rotary movements of the heads 42' and 43' in scanning across the tape in the direction of the arrow b, each of the scanning paths $u_1$

and $u_2$ of the heads 42' and 43', respectively, can be made to coincide substantially with the width of a respective track $t_1$ or $t_2$ along the middle portion of the respective track. In that case, the scanning paths $u_1$ and $u_2$ deviate substantially from the respective tracks $t_1$ an $t_2$ at the opposite end portions of the tracks and, as shown in Fig. 9A and 9B, the FM audio signals separated from the mixed signals $M_1$ and $M_2$ reproduced by the rotary heads 42' and 43' in the fast-forward reproducing mode, and indicated at $u'_1$ and $u'_2$, will have normal signal levels only during the scanning of the middle portions of the respective tracks $t_1$ and $t_2$, the signal levels decreasing undesirably when scanning the end portions of the respective tracks. By reason of the foregoing, when the demodulated audio signal portions $SL_1$ and $SL_2$ or $SR_1$ and $SR_2$ are combined by the operation of the switch circuits 72 and 74 in response to the switch control-signal Q, the resulting reconstituted audio signals SL' and SR' obtained in the fast-forward reproducing mode would be of substantially reduced level, and therefore have an undesirably increased noise/signal ratio, at the junctions between those portions of the reconstituted audio signals reproduced by the heads 42' and 43' from the tracks $t_1$ and $t_2$, respectively.

In order to compensate for such noise occurring in the reconstituted audio signals substantially at the junctions between the portions thereof derived from the reproduced mixed signals $M_1$ and $M_2$, respectively, the reproducing circuit 10' of Fig. 7 is shown, in accordance with an embodiment of this invention, to be further provided with noise compensating circuits 97 and 98 interposed between the de-emphasis circuit 77 and the switch 79 and between the de-emphasis circuit 78 and the switch 80, respectively. Such noise compensating circuits 97 and 98 are made operative only in the fast-forward reproducing mode, for example, when the tape is advanced at twice its normal speed, as in Fig. 8. Upon selection of the fast-forward reproducing mode, a corresponding mode selecting signal $S_1$ closes a normally open switch circuit 99 through which the control signal Q (Fig. 9C) is then supplied to first and second delay circuits 100 and 101 for obtaining respective delayed control signals Q' and Q'' (Fig. 9D and 9E). Such delayed control signals Q' and Q'' are supplied to respective inputs of an exclusive-OR circuit 102 which has its output supplied through an inverter 103 to provide a control signal $W_1$ (Fig. 9F) for the noise compensating circuits 97 and 98.

As shown particularly in Fig. 9C, the control signal Q is at a high or "1" level for one field interval of the video signal, for example during the scanning of the tape by the rotary head 42' and is at a low or "0" level during the scanning of the tape by the rotary head 42' and is at a low or "0" level during the next field interval, that is during the scanning of the tape by the rotary head 43'. Further, as shown, the transition of the control signal Q between its high level and its low level occurs substantially at the midpoint of each period $I_p$

during which an output from the rotary head 42' overlaps or occurs simultaneously with an output from the rotary head 43'. As shown particularly, in Fig. 9D, the delay circuit 100 has a delay time $\tau_1$ which is approximately one-half of the overlap period $I_p$, while the delay circuit 101 has a delay time $\tau_2$ which is approximately equal to the field period less one-half of the overlap period $I_p$. By reason of the foregoing, the delayed control signals Q' and Q" are simultaneously either at their high levels or their low levels only during the overlap periods $I_p$ to provide a "0" output from the exclusive-OR circuit 102 with the result that the control signal or pulse $W_1$ from the inverter 103 (Fig. 9F) is at its high level only during each overlap period which may have a duration of, for example, 300 microseconds.

Each of the noise compensating circuits 97 and 98 may comprise a circuit arrangement similar to that shown in Fig. 10A, in which case, in response to the high level of the control signal or pulse $W_1$, the reconstituted audio signal SL' or SR' is replaced by a previously held level thereof, as shown in Fig. 9G. Alternatively, each of the noise compensating circuits 97 and 98 may have a configuration similar to that shown in Fig. 10B, in which case, in response to the high level of the control signal or pulse $W_1$, the respective reconstituted audio signal SL' or SR' is replaced by a predetermined signal level as established by the voltage source 96. In still another alternative arrangement for each of the noise compensating circuits 97 and 98, the voltage source 96 shown in Fig. 10B may be replaced by a simple connection to ground so that a muting action occurs for removing noise upon the change-over of the switch circuit 95 by the high level of the control signal or pulse $W_1$. Whichever circuit arrangement is provided for each of the noise compensating circuits 97 and 98, it will be appreciated that the arrangement is made operative in the trick or fast-forward reproducing mode for removing the noise that would otherwise appear in the reconstituted audio signal SL' or SR' when the rotary heads 42' and 43' are situated adjacent end portions of the record tracks $t_1$ and $t_2$ being imperfectly scanned thereby.

Since the rotary heads 42' and 43' have different azimuth angles respectively corresponding to the azimuth angles with which the mixed signals $M_1$ and $M_2$ were recorded in the tracks $t_1$ and $t_2$, respectively, it will be appreciated that, in any trick reproducing mode of the reproducing circuit or apparatus 10', the heads 42' and 43' have to be made operative to reproduce the recorded signals only while scanning the tracks $t_1$ and $t_2$, respectively. In other words, in a trick reproducing mode of the circuit 10', if the rotary head 43' is made operative while scanning a track $t_1$ in which a mixed signal $M_1$ has been recorded with an azimuth angle different from that of the head 43', the resulting azimuth loss will prevent satisfactory reproducing of the mixed signal $M_1$ from the track $t_1$ by the rotary head 43'.

Accordingly, as shown in Fig. 11, when a trick reproducing mode, for example a slow-motion reproducing mode, of a reproducing circuit 10" requires that one track on the tape T be repeatedly scanned during a plurality of successive field intervals, a normally inoperative rotary head 142 having the same azimuth angle as the rotary head 42' is positioned adjacent the rotary head 43', as shown in Fig. 12, and is made operative instead of the head 43' when a track $t_1$ is to be scanned repeatedly during a plurality of successive field intervals.

In the reproducing circuit 10" of Fig. 11, in which items corresponding to those described above with reference to Fig. 7 are identified by the same references, a switch circuit 104 is provided for alternatively connecting the rotary heads 43' and 142 to the input of the reproducing amplifier 54. The output of the reproducing amplifier 54 is connected to inputs of a pair of switch circuits 105 and 106 arranged in parallel and which, in the positions of the switch circuits 104, 105 and 106 shown in full lines in Fig. 11, are operative to apply the mixed signal $M_2$ reproduced from a track $t_2$ by the head 43' from first outputs of the switch circuits 105 and 106 to the bandpass filters 58 and 59. As in the reproducing circuit 10' of Fig. 7, the bandpass filters 58 and 59 are operative to separate, from the reproduced mixed signal $M_2$, the respective FM audio signals $LF_2$ and $RF_4$ which are passed through the limiters 61 and 63 to the respective frequency demodulators 65 and 67. The resulting demodulated audio signal portions $SL_2$ and $SR_2$ are applied to first inputs of switch circuits 107 and 108 having their outputs connected through the low pass filters 69 and 71 to respective inputs of the switch circuits 72 and 74. Other or second outputs of the switch circuits 105 and 106 are connected to respective second inputs of the switch circuits 107 and 108, respectively, through alternate channels 109 and 110, respectively. The alternate channel 109 is shown to include a bandpass filter 56', a limiter 60' and a frequency demodulator 64' corresponding to the bandpass filter 56, the limiter 60 and the frequency demodulator 64, respectively, while the alternate channel 110 is shown to include a bandpass filter 57', a limiter 62' and a frequency demodulator 66' corresponding to the bandpass filter 57, the limiter 62 and the frequency demodulator 66, respectively.

It will be appreciated from the foregoing that the bandpass filters 56' and 57' pass frequency bands corresponding to the bands of the FM audio signals $LF_1$ and $RF_3$, respectively. Thus, when the rotary head 142 is scanning a track $t_1$ for reproducing the mixed signal $M_1$ therefrom and the switch circuits 104 to 108 are changed over from the positions shown in full lines in Fig. 11 to the positions shown in broken lines, the bandpass filters 56' and 57' will be operative to separate from the reproduced mixed signal $M_1$ the respective FM audio signals $LF_1$ and $RF_3$, which are passed through the limiters 60' and 62' to the respective frequency demodulators 64' and 66'. The resulting demodulated audio signal portions $SL'_1$ and $SR'_1$ are then applied through the switch circuits 107 and 108 and the low pass filters 69 and 71 to the respective inputs of the switch circuits 72 and 74.

The reproducing circuit 10″ shown in Fig. 11 is particularly suitable for a slow-motion reproducing mode in which the tape is intermittently advanced at an aggregate speed equal to one-third of the normal tape speed used for recording and in the normal reproducing mode. In such one-third slow-motion reproducing mode, the tape is suitably intermittently driven by being held at rest for an interval equivalent to three fields of the video signal, during which the head 42′, the head 142 and then the head 42′ again sucessively scan a track $t_1$ on the tape for repeatedly reproducing the mixed signal $M_1$ therein, and the tape is then advanced at the normal tape speed through a distance along the tape equivalent to the pitch, or the distance from the centre of the track $t_1$ to the centre of the next adjacent track $t_2$, with the rotary head 43′ being effective to scan such next adjacent track $t_2$ for reproducing the mixed signal $M_2$ therefrom during the following field interval or period. In order to achieve the desired operation of the reproducing circuit 10″ for the foregoing one-third slow-motion reproducing mode, a switch control signal $S_2$ is suitably applied to the switch circuit 99 for closing the latter upon the selection of such slow-motion reproducing mode, and a suitably generated switch control signal $S_2$ is applied simultaneously to the switch circuits 104 to 108. The switch control signal $S_3$ is normally at a low level to maintain the switch circuits 104 to 108 in the positions shown in full lines in Fig. 11 so long as the reproducing circuit 10″ is in its normal reproducing mode. In such normal reproducing mode, the circuit 10″ acts in the same manner as the previously described circuit 10′ and the switch circuit 99 remains open so that the noise compensating circuits 97 and 98 remain inoperative.

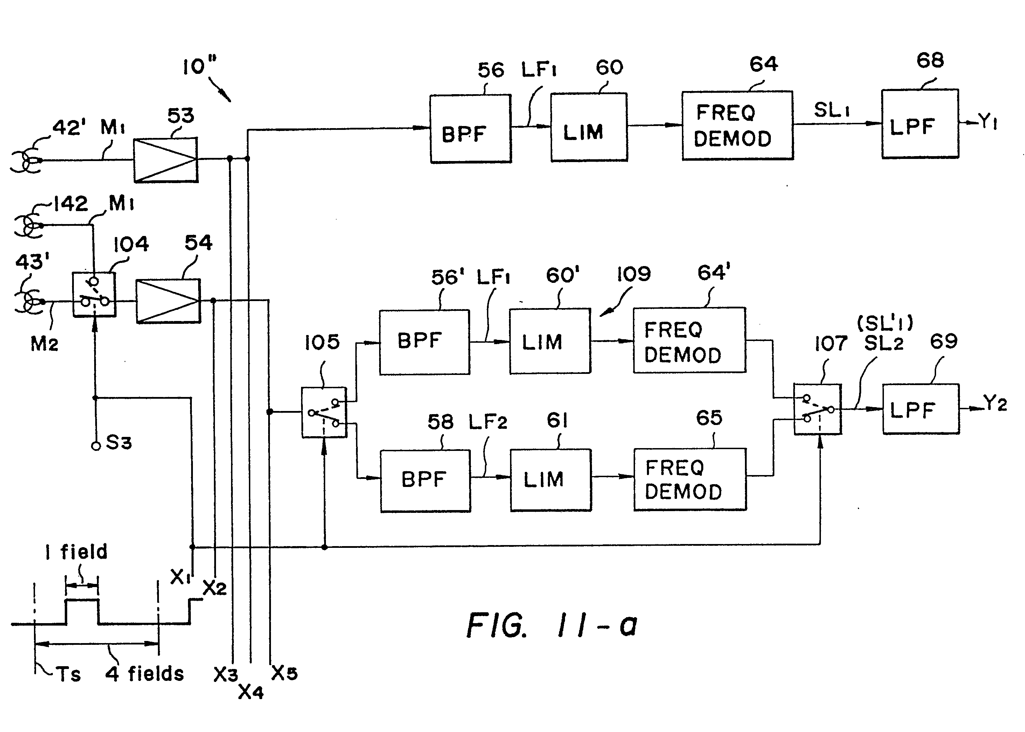

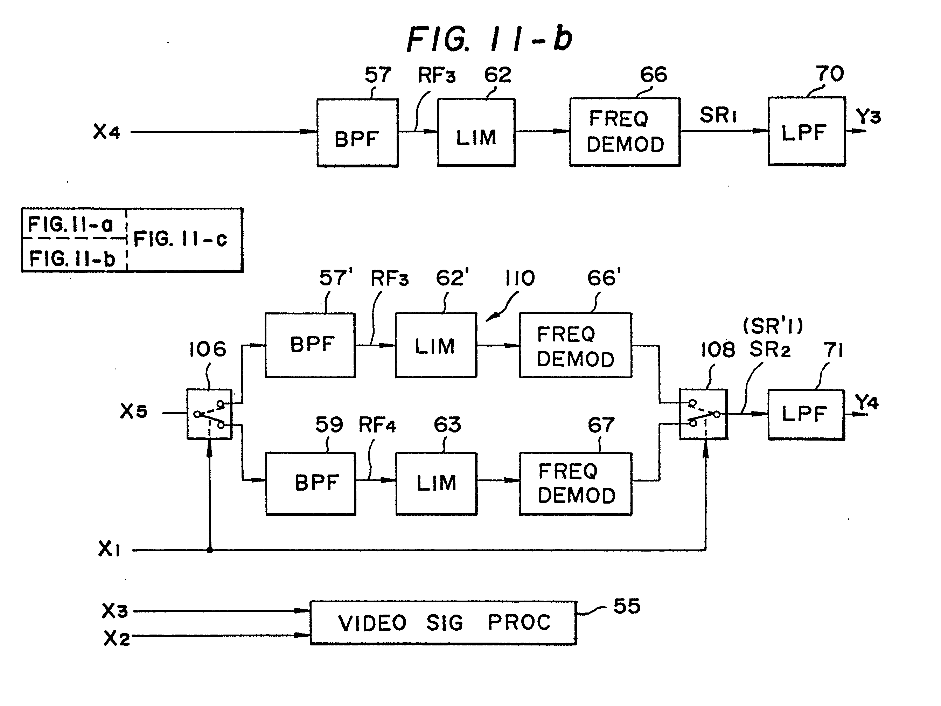

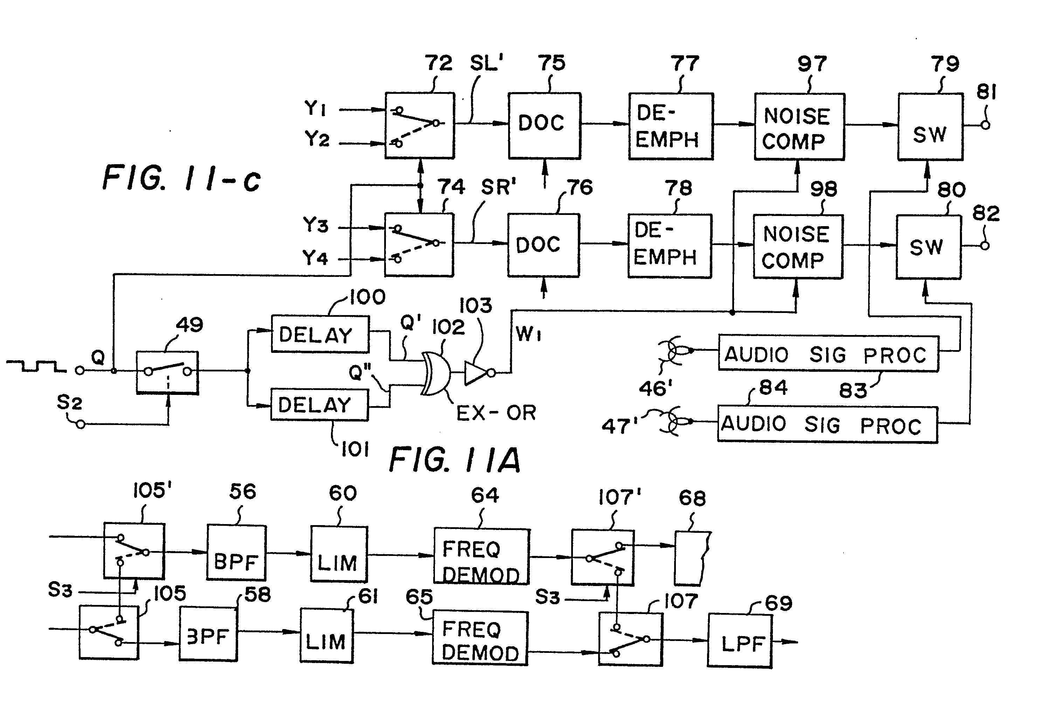

However, when the one-third slow-motion reproducing mode is selected, for example at a time $T_s$, the switch control signal $S_3$ is generated to have a 4-field repeating cycle in which: during the first field interval, the switch control signal $S_3$ is at a low level to maintain the switch circuits 104 and 108 in the positions shown in full lines; in the second field interval, the switch control signal $S_3$ is at a high level to change over the switch circuits 104 to 108 to the positions shown in broken lines; and, in the third and fourth field intervals, the switch control signal $S_3$ is returned to its low level for again disposing the switch circuits 104 to 108 in the positions shown in full lines. Further, the start of the 4-field cycle of the switch control signal $S_3$ for the one-third slow-motion reproducing mode, that is, the time indicated at $T_s$ in Fig. 11, is made to coincide with the commencement of the scanning of a track $t_1$ by the rotary head 42′. Of couse, at the same time that the described switch control signal $S_3$ is being applied to the switch circuits 104 to 108, the control signal Q, which alternates between its high and low levels in successive field intervals, is applied to the switch circuits 72 and 74 for changing-over these circuits in the same manner as described with reference to Fig. 7. Further, in the one-third slow-motion reproducing mode, the signal Q is also applied through the closed switch circuit 99 to the delay circuits 100 and 101 which operate in association with the exclusive-OR circuit 102 and the inverter 103 for producing the control signal or pulse $W_1$ (Fig. 14G) by which the noise compensating circuits 97 and 98 are made to operate when the rotary heads 42′, 142 and 43′ are situated adjacent end portions of the record tracks $t_1$ and $t_2$.

In the one-third slow-motion reproducing mode of the circuit 10″, when the head 42′ scans a track $t_1$ along a path indicated at $u_1$ in Fig. 13 for reproducing the mixed signal $M_1$ recorded therein, the bandpass filters 56 and 57 respectively separate therefrom the FM audio signals $LF_1$ and $RF_3$, each of which has a signal level indicated at $u'_1$ (Fig. 14A) between the joints $j_2$ and $j_3$ at the beginning and end, respectively, of the first field interval after the selection of the slow-motion reproducing mode at the time $T_s$. The demodulated audio signal portions $SL_1$ and $SR_1$ obtained from the FM audio signals $LF_1$ and $RF_3$ in the demodulators 64 and 66 are passed through the switch circuits 72 and 74 in the positions shown in full lines in Fig. 11. Thus, in the first field interval after the time $T_s$ of establishment of the slow-motion reproducing mode, the demodulated audio signal portion $SL_1$ (Fig. 14C) is selected by the switch circuit 72 under the control of the signal Q (Fig. 14E) to form the respective portion of the reconstituted audio signal SL′ (Fig. 14F). In the next field interval commencing at the joint $j_3$, the control signal $S_3$ causes change-over of the switch circuits 104 to 108 to the positions shown in broken lines in Fig. 11, and the control signal Q also causes change-over of the switch circuits 72 and 74 to the positions shown in broken lines. Thus, in such second field interval, the rotary head 142 is operative to again reproduce the mixed signal $M_1$ recorded in the track $t_1$ which is being scanned for the second time, and such reproduced mixed signal $M_1$ is supplied through the switch circuits 104, 105 and 106 to the bandpass filters 56′ and 57′ for separating the FM audio signals $LF_1$ and $RF_3$, respectively. The resulting demodulated audio signal portions $SL'_1$ and $SR'_1$ obtained from the frequency demodulators 64′ and 66′ are supplied through the switch circuits 107 and 108 to the switch circuits 72 and 74 which are changed over to the positions shown in broken lines. Thus, in the second field interval of the operation in the slow-motion reproducing mode, the demodulated audio signal portion $SL'_1$ (Fig. 14D) derived from the second scanning of the track $t_1$ by the rotary head 142 is included in the reconstituted audio signal SL′ (Fig. 14F). Similarly, in the second field interval of the slow-motion reproducing operation, the demodulated audio signal portion $SR'_1$ also derived from the second scanning of the track $t_1$ by the rotary head 142 is included in the reconstituted audio signal SR′.

In the next or third field interval of the slow-motion reproducing operation commencing at a joint $j_4$, the signal $S_3$ returns the switch circuits 104 to 108 to the positions shown in full lines and the control signal Q also returns the switch circuits 72 and 74 to the positions shown in full lines. Thus, in such third field interval, the operation of the circuit shown in Fig. 11 is similar to that described above for the first field interval, that is, the rotary head 42' is made operative to again reproduce the mixed signal $M_1$ from the track $t_1$ which is being scanned for the third time, and the reconstituted audio signals SL' and SR' are respectively constituted by the demodulated audio signal portions $SL_1$ and $SR_1$ from the frequency demodulators 64 and 66, respectively. Finally, in the fourth or last field interval of the cycle of the control signal $S_3$, the switch circuits 104 to 108 remain in the positions shown in full lines in Fig. 11, while the control signal Q causes changeover of the switch circuits 72 and 74 to the positions shown in broken lines. As a result of the foregoing, in the fourth field interval during which the tape T is advanced the rotary head 43' scans a track $t_2$, as indicated at $u_2$ in Fig. 13, for reproducing the mixed signal $M_2$ recorded therein. Such reproduced mixed signal is supplied through the switch circuits 104, 105 and 106 to the bandpass filters 58 and 59 which respectively separate therefrom the FM audio signals $LF_2$ and $RF_4$, with the level of each of such separated FM audio signals being indicated at $u'_2$ (Fig. 14B) in the time interval between joints $j_5$ and $j_6$. The demodulated audio signal portion $SL_2$ (Fig. 14D) derived from the FM audio signal $LF_2$ by the demodulator 65 is passed through the switch circuit 107 and then through the switch circuit 72 to be included in the reconstituted audio signal SL' (Fig. 14F). Similarly, the audio signal portion $SR_2$ demodulated from the FM audio signal $RF_4$ is passed through the switch circuit 104 and then through the switch circuit 74 to form the reconstituted audio signal SR' during the fourth field interval between the joints $j_5$ and $j_6$.

As noted earlier, and as described in detail with reference to the operation of the reproducing circuit 10', the noise compensating circuits 97 and 98 of the reproducing circuit 10'' are made operative at each of the joints $j_3$ to $j_6$ by the control signal or pulse $W_1$ produced after the establishment of the slow-motion reproducing mode (Fig. 14G). By reason of such operation of the noise compensating circuits 97 and 98, noise occurring at any of such joints will be removed from the reconstituted audio signals SL' and SR'. Thus, for example, in the case of the reconstituted audio signal SL' (Fig. 14F), noise N at the joints $j_3$ and $j_4$ would be removed by the operation of the noise compensating circuit 97 at such joints. It will be noted that such noise N at the joints $j_3$ and $j_4$ between the demodulated audio signal portions $SL_1$ derived from the operation of the rotary head 42' and the demodulated audio signal portion $SL'_1$ derived from the operation of the rotary head 142 may be caused by the mis-matching of the signal portions $SL_1$ and $SL'_1$ at the respective over-

lapping periods $l_p$ due to the fact that the angular distance between the head 42' and the head 142 is not precisely 180°, as shown in Fig. 12.

Although the circuit 10'', as shown in Fig. 11, includes alternate channels 109 and 110 for separating the FM audio signals $LF_1$ and $RF_3$ from the mixed signal $M_1$ when the signal $M_1$ is being reproduced by the rotary head 142 and for demodulating the audio signal portions $SL'_1$ and $SR'_1$ therefrom, it should be appreciated that such alternate channels 109 and 110 can be replaced by additional switch circuits for achieving the same results. More particularly, as shown in Fig. 11A, in place of the alternate channel 109 there may be provided a switch circuit 105' disposed in advance of the bandpass filter 56 and a switch circuit 107' connected to the output of the frequency demodulator 64. The switch circuits 105' and 107' are connected to the switch circuits 105 and 107, respectively, and are also operated by the control signal $S_3$. Thus, when the signal $S_3$ is at its low level to dispose the switches 105, 105', 107 and 107' at the positions thereof shown in full lines in Fig. 11A, a mixed signal $M_1$ reproduced from a track $t_1$ by the head 42' is applied through the switch circuit 105' to the bandpass filter 56 which separates therefrom the FM audio signal $LF_1$, whereupon the signal $LF_1$ is demodulated in the frequency demodulator 64 to provide the respective demodulated audio signal portion $SL_1$ which is passed through the switch circuit 107' to the low pass filter 68. With the switch circuits 105 and 107 in the positions thereof shown in full lines in Fig. 11A, a mixed signal $M_2$ reproduced by the head 43' from a track $t_2$ is passed through the switch circuit 105 to the bandpass filter 58 for the separation therefrom of the FM audio signal $LF_2$ from which the frequency demodulator 65 demodulates the audio signal portion $SL_2$ passed through the switch circuit 107 to the low pass filter 69. When the control signal $S_3$ is at its high level, for example in the second field interval following the initiation of the slow-motion reproducing mode, the switch circuits 105, 105', 107 and 107' are thereby changed over to the positions shown in broken lines in Fig. 11A. As a result thereof, a mixed signal $M_1$ reproduced by the rotary head 142 from a track $t_1$ is passed through the switch circuits 105 and 105' to the bandpass filter 56 for the separation therefrom of the FM audio signal $LF_1$ which is demodulated in the frequency demodulator 64 to provide a demodulated audio signal portion $SL'_1$ which is passed through the switch circuits 107' and 107 to the low pass filter 69.

It will be appreciated that the alternate channel 110 in Fig. 11 similarly may be replaced by additional switch circuits associated with the switch circuits 106 and 108, respectively, so that the bandpass filter 57 is employed for separating the FM audio signal $RF_3$ from a mixed signal $M_1$ reproduced from a track $t_1$ by either the head 42' or the head 142.

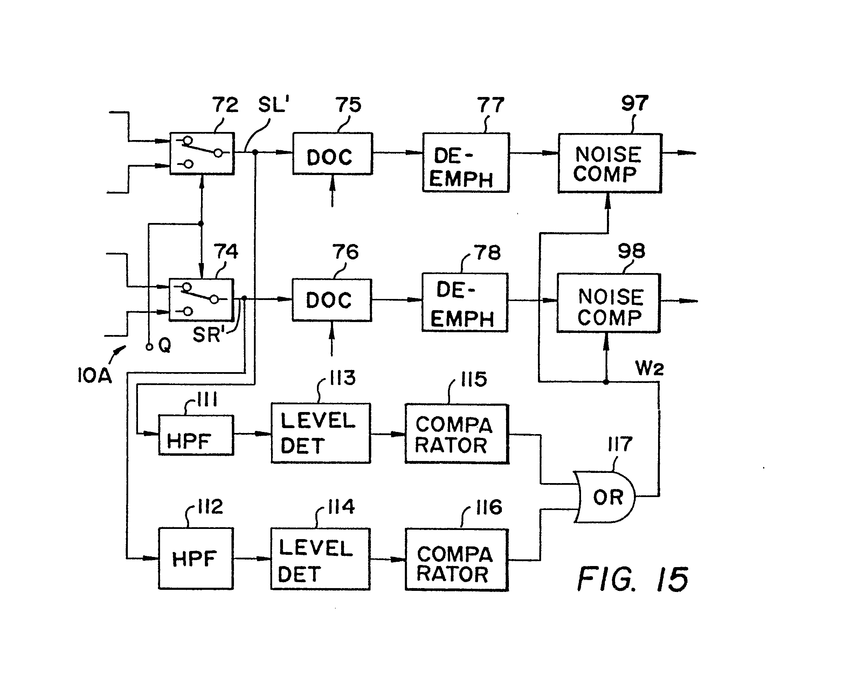

In the reproducing circuits 10' and 10'' shown in Fig. 7 and 11, the noise compensating circuits 97 and 98 are made operative, in the respective trick reproducing modes, in response to the control signal or pulse $W_1$ (Fig. 9F and 14G) which is derived from the control signal Q so as to occur when the heads 42' and 43' or the heads 42', 142 and 43' are situated adjacent end portions of the record tracks being imperfectly scanned thereby. Since the noise to be compensated for by the circuits 97 and 98 will occur when the heads are situated adjacent end portions of the record tracks being imperfectly scanned thereby in a trick reproducing mode, the arrangements shown in Fig. 7 and 11 for operating the circuits 97 and 98 are suitable for removing the undesirable noise. However, if desired, the noise compensating circuits 97 and 98 may be made operative in response to the detection of a predetermined level of noise in the reconstituted audio signal SL' or SR' issuing from the outputs of the switch circuits 72 and 74, respectively. More particularly, as shown in Fig. 15, in a reproducing circuit 10A which may be otherwise similar to the previously described circuit 10' or 10", the reconstituted audio signals SL' and SR' obtained from the switch circuits 72 and 74 are also supplied to high pass filters 111 and 112, respectively, each of which may suitably have a cut-off frequency of 40 kHz. Since the low pass filters 68 to 71 leading to the inputs of the switch circuits 72 and 74 have been described as having cut-off frequencies of 150 kHz, it will be appreciated that noise in the frequency range of 40 to 150 kHz will appear at the outputs of the high pass filters 111 and 112. The levels of such noise issuing from the outputs of the high pass filters 111 and 112 are detected by level detectors 113 and 114, respectively. The resulting detected signal levels in the form of voltage signals are applied to comparators 115 and 116 in which the detected level signals from the detectors 113 and 114, respectively, are compared with reference or threshold voltage levels. Whenever the detected level signal from the detector 113 or 114 exceeds the reference or threshold level, the respective comparator 115 or 116 provides a high level output or "1" signal through an OR circuit 117 for application as a control signal or pulse $W_2$ to the noise compensating circuits 97 and 98 for operating them similarly to the signal or pulse $W_1$ in Fig. 7 and 11.

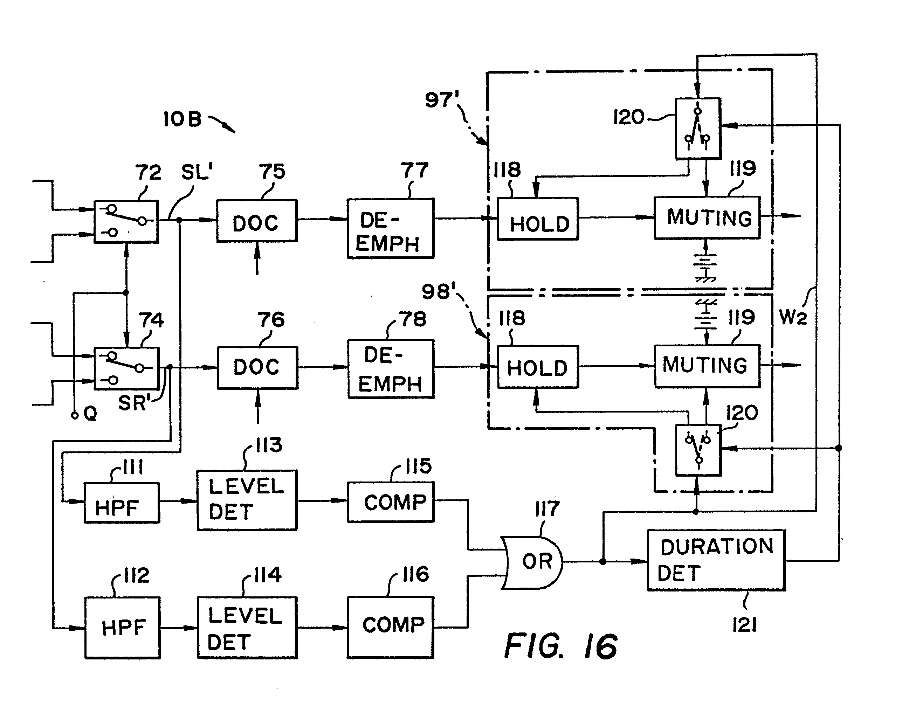

Referring now to Fig. 16, it will be seen that, in a reproducing circuit 10B which is otherwise similar to the reproducing circuit 10A described above with reference to Fig. 15, each of the noise compensating circuits 97' and 98' includes a holding circuit 118, for example of the kind shown in Fig. 10A, and a muting circuit 119, for example of the kind shown in Fig. 10B, connected in series to act on the output of the respective de-emphasis circuit 77 or 78. Each of the circuits 97' and 98' is further shown to include a switch circuit 120 by which the control signal or pulse $W_2$ is selectively applied to the respective holding circuit 118 or muting circuit 119 in dependence upon the duration of the pulse $W_2$ from the OR circuit 117 as detected by a duration detecting circuit 121.

In operation of the reproducing circuit 10B of Fig. 16, in the case of a short signal or pulse $W_2$ indicating the occurrence of noise of short duration at a joint or junction of the reconstituted audio signal SL' or SR', the corresponding signal from the duration detecting circuit 121 disposes the switch circuits 120 in the positions shown in full lines in Fig. 16 so that the control signal or pulse $W_2$ is applied to the holding circuits 118. In response to the foregoing, each of the holding circuits 118 substitutes, for the noise of short duration of a joint of the respective reconstituted audio signal SL' or SR', a previously held level of such reconstituted audio signal. On the other hand, if the duration of the detected noise is relatively long, the corresponding signal from the duration detector 121 changes over the switch circuits 120 to the positions shown in broken lines in Fig. 16 so that the control signal or pulse $W_2$ is applied to the muting circuits 119. In that case, each muting circuit 119 substitutes, for the noise of long duration at a joint or junction of the respective reconstituted audio signal SL' or SR', a predetermined or fixed signal level.

It will be appreciated from the foregoing that, in the various described embodiments of this invention, noises that may arise at the junctions in the reconstituted audio signals SL' or SR', particularly in trick reproducing modes, are effectively eliminated or compensated for.

## Claims

1. Apparatus for reproducing video and audio signals recorded as first and second mixed signals ($M_1$, $M_2$) in successive alternately arranged adjacent first and second parallel record tracks ($t_1$, $t_2$), respectively, extending obliquely on a magnetic record tape (T), the first and second mixed signals ($M_1$, $M_2$) comprising respective carriers of different frequencies frequency modulated by at least one audio signal (SL, SR) to constitute respective FM audio signals ($LF_1$, $LF_2$, $RF_3$, $RF_4$) mixed with a video signal(V), the apparatus comprising

magnetic head means operative to scan substantially along adjacent first and second ones of the records tracks ($t_1$, $t_2$) in succession for alternately reproducing the first and second mixed signals ($M_1$, $M_2$) therefrom as the tape (T) is advanced at a normal speed in a normal reproducing mode of the apparatus, the head means scanning imperfectly along the record tracks ($t_1$, $t_2$) in another reproducing mode of the apparatus in which the tape (T) is advanced at other than the normal speed so that the mixed signals ($M_1$, $M_2$) are reproduced with noise, particularly when the head means are situated adjacent end portions of the record tracks being imperfectly scanned thereby,

means (56, 57, 58, 59) for separating the FM audio signals ($LF_1$, $LF_2$, $RF_3$, $RF_4$) from the respective reproduced mixed signals ($M_1$, $M_2$),

frequency demodulating means (64, 65, 66, 67) for receiving the FM audio signals separated from the reproduced mixed signals and demodulating therefrom respective alternately reproduced portions ($SL_1$, $SL_2$, $SR_1$, $SR_2$) of the audio signal,

combining means (72, 74) for sequentially combining the alternately reproduced portions ($SL_1$, $SL_2$, $SR_1$, $SR_2$) of the audio signal into a reconstituted audio signal (SL', SR'), and

means for removing from the reconstituted audio signal (SL', SR') the noise which is reproduced with the mixed signals ($M_1$, $M_2$) in the other reproducing mode.

2. Apparatus according to Claim 1, wherein the means for removing the noise in the other reproducing mode is made operative when the magnetic head means is situated adjacent end portions of the record tracks being imperfectly scanned thereby.

3. Apparatus according to Claim 1, wherein the means for removing the noise in the other reproducing mode includes muting means made operative to mute the reconstituted audio signal (SL', SR') when the magnetic head means is situated adjacent end portions of the record tracks which are imperfectly scanned in the other reproducing mode.

4. Apparatus according to Claim 1, wherein the means for removing the noise in the other reproducing mode includes means (94) for holding levels of the reconstituted audio signal (SL', SR'), and means (91) for replacing the reconstituted audio signal with a held level thereof when the magnetic head means is situated adjacent end portions of the record tracks which are imperfectly scanned in the other reproducing mode.

5. Apparatus according to Claim 1, wherein the means for removing the noise in the other reproducing mode includes means (96) for establishing a predetermined signal level, and means (95) for replacing the reconstituted audio signal (SL', SR') with the predetermined signal level when the magnetic head means is situated adjacent end portions of the record tracks which are imperfectly scanned in the other reproducing mode.

6. Apparatus according to Claim 1, wherein the means for removing the noise in the other reproducing mode includes means for detecting a level of noise in the reconstituted audio signal (SL', SR'), and noise compensating means (97, 98; 97', 98') made operative whenever the detected noise level exceeds a predetermined threshold level.

7. Apparatus according to Claim 6, wherein the noise compensating means (97', 98') includes holding means (118) for holding levels of the reconstituted audio signal (SL', SR'), and means (91) for replacing the reconstituted audio signal with a level from the holding means (118) when the detected noise level exceeds the threshold level.

8. Apparatus according to Claim 7, wherein the noise compensating means (97', 98') includes muting means (119) for muting noise included in the reconstituted audio signal (SL', SR'), and selecting means (121) responsive to the duration for which the detected noise level exceeds the threshold level for operating the holding means (118) so long as the duration is less than a predetermined period and for operating the muting means (119) when the duration exceeds the predetermined period.

9. Apparatus according to Claim 6, wherein the noise compensating means (97', 98') includes muting means (119) operative to mute noise contained in the reconstituted audio signal (SL', SR'), and means (120) to cause operation of the muting means (119) whenever the detected noise level exceeds the threshold level.

10. Apparatus according to Claim 8 or Claim 9, wherein the muting means (119) includes a source (96) of a predetermined signal level which is used to replace the reconstituted audio signal (SL', SR') upon operation of the muting means.

11. Apparatus according to any one of Claims 6 to 10, wherein the means for detecting the noise level includes high pass filter means (111, 112) connected to an output of the combining means (72, 74) and having a cut-off frequency above an upper limit of the audio band so as to pass only high frequency noise, means (113, 114) for detecting the level of the high frequency noise, and comparator means (115, 116) for comparing the detected level of the high frequency noise with the threshold level and correspondingly actuating the noise compensating means (97, 98; 97', 98').

12. Apparatus according to any one of the preceding claims, comprising drop-out compensating means (75, 76) responsive to drop-outs detected at random in at least portions of the reproduced mixed signals for providing corresponding corrections in the reconstituted audio signal (SL', SR').

13. Apparatus according to Claim 12, wherein the drop-out compensating means includes means (85, 86) for detecting the drop-outs at random in the FM audio signals separated from the reproduced mixed signals.

14. Apparatus according to any one of the preceding claims, wherein the head means includes first and second heads (42', 43') arranged alternately to move across the record tape (T) at the field period of the video signal (V),

the apparatus includes means for providing a control signal (Q) in synchronism with the alternate moving of the heads (42', 43') for identifying which of the first and second heads (42', 43') is scanning a track on the tape, and

the means for removing noise from the reconstituted audio signal includes means (100, 101, 102) for generating a noise suppression signal ($W_1$) in response to the control signal (Q) in the other reproducing mode, the noise suppression signal ($W_1$) having an operative level at the commencement and conclusion of the movement of each of the heads across the tape, and means (97, 98) for suppressing noise in the reconstituted audio signal in response to said operative level of the noise suppression signal ($W_1$).

**Patentansprüche**

1. Anordnung zur Wiedergabe von Video- und Audiosignalen, die als erste bzw. zweite gemischte Signale ($M_1$, $M_2$) in aufeinanderfolgenden, wechselweise angeordneten, einander benachbarten ersten und zweiten parallelen Aufzeichnungsspuren ($t_1$, $t_2$) aufgezeichnet sind, welche auf einem magnetischen Aufzeichnungsband (T) schräg verlaufen, wobei die ersten und zweiten gemischten Signale ($M_1$, $M_2$) Träger unterschiedlicher Frequenzen umfassen, welche durch zumindest ein Audiosignal (SL, SR) zur Bildung von FM-Audiosignalen ($LF_1$, $LF_2$, $RF_3$, $RF_4$) frequenzmoduliert sind, welche mit einem Videosignal (F) gemischt sind, umfassend:

eine magnetische Kopfeinrichtung, die so betrieben ist, dass sie aufeinanderfolgend eine Abtastung weitgehend längs der einander benachbarten ersten und zweiten Aufzeichnungsspuren ($t_1$, $t_2$) vornimmt, um abwechselnd von den betreffenden Spuren die ersten und zweiten gemischten Signale ($M_1$, $M_2$) wiederzugeben, wenn das Band (T) mit einer normalen Geschwindigkeit in einem normalen Wiedergabebetrieb der Anordnung transportiert wird, wobei die Kopfeinrichtung eine fehlerhafte Abtastung längs der Aufzeichnungsspuren ($t_1$, $t_2$) in einem anderen Wiedergabebetrieb der Anordnung vornimmt, bei dem das Band (T) mit einer anderen Geschwindigkeit als der normalen Geschwindigkeit transportiert wird, so dass die gemischten Signale ($M_1$, $M_2$) gestört wiedergegeben werden, und zwar insbesondere dann, wenn die Kopfeinrichtung neben Endbereichen der dabei fehlerhaft abgetasteten Aufzeichnungsspuren sich befindet;

Einrichtungen (56, 57, 58, 59) zur Abtrennung der FM-Audiosignale ($LF_1$, $LF_2$, $RF_3$, $RF_4$) aus den entsprechend wiedergegebenen gemischten Signalen ($M_1$, $M_2$);

Frequenzdemodulationseinrichtungen (64, 65, 66, 67), welche die aus den wiedergegebenen gemischten Signalen abgetrennten FM-Audiosignale aufnehmen und welche aus diesen Signalen abwechselnd wiedergegebene Signalanteile ($SL_1$, $SL_2$, $SR_1$, $SR_2$) des Audiosignals demodulieren;

Kombinationseinrichtungen (72, 74), die sequentiell die abwechselnd wiedergegebenen Signalanteile ($SL_1$, $SL_2$, $SR_1$, $SR_2$) des Audiosignals zu einem wiederhergestellten Audiosignal (SL', SR') kombinieren;

und eine Einrichtung, welche aus dem wiederhergestellten Audiosignal (SL', SR') die Störung beseitigt, die mit den gemischten Signalen ($M_1$, $M_2$) bei dem anderen Wiedergabebetrieb wiedergegeben wird.

2. Anordnung nach Anspruch 1, wobei die Einrichtung zur Beseitigung der Störung bei dem anderen Wiedergabebetrieb wirksam gemacht wird, wenn sich die magnetische Kopfeinrichtung neben den Endbereichen der dabei fehlerhaft abgetasteten Aufzeichnungsspuren befindet.

3. Anordnung nach Anspruch 1, wobei die Einrichtung zur Beseitigung der Störung bei dem anderen Wiedergabebetrieb eine Stummsteuereinrichtung enthält, die zur Stummsteuerung des wiederhergestellten Audiosignals (SL', SR') wirksam gemacht wird, wenn die magnetische Kopfeinrichtung neben den Endbereichen der Aufzeichnungsspuren sich befindet, die bei dem anderen Wiedergabebetrieb fehlerhaft abgetastet werden.

4. Anordnung nach Anspruch 1, wobei die Einrichtung zur Beseitigung der Störung bei dem anderen Wiedergabebetrieb eine Einrichtung (94), welche die Pegel des wiederhergestellten Audiosignals (SL', SR') festhält, und eine Einrichtung (91) umfasst, welche das wiederhergestellte Audiosignal mit einem festgehaltenen Pegel dieses Signals ersetzt, wenn die magnetische Kopfeinrichtung sich neben den Endbereichen der Aufzeichnungsspuren befindet, die bei dem anderen Wiedergabebetrieb fehlerhaft abgetastet werden.

5. Anordnung nach Anspruch 1, wobei die Einrichtung zur Beseitigung der Störung bei dem anderen Wiedergabebetrieb eine Einrichtung (96), welche einen bestimmten Signalpegel festlegt, und eine Einrichtung (95) aufweist, welche das wiederhergestellte Audiosignal (SL', SR') mit dem bestimmten Signalpegel in dem Fall ersetzt, dass die magnetische Kopfeinrichtung sich neben den Endbereichen der Aufzeichnungsspuren befindet, die bei dem anderen Wiedergabebetrieb fehlerhaft abgetastet werden.

6. Anordnung nach Anspruch 1, wobei die Einrichtung zur Beseitigung der Störung bei dem anderen Wiedergabebetrieb eine Einrichtung zur Ermittelung eines Pegels der Störung in dem wiederhergestellten Audiosignal (SL', SR') und eine Störungskompensationseinrichtung (97, 98; 97', 98') aufweist, die jeweils dann wirksam gemacht ist, wenn der ermittelte Störungspegel einen bestimmten Schwellwertpegel überschreitet.

7. Anordnung nach Anspruch 6, wobei die Störungskompensationseinrichtung (97', 98') eine Halteeinrichtung (118) zum Festhalten der Pegel des wiederhergestellten Audiosignals (SL', SR') und eine Einrichtung (91) umfasst, welche das wiederhergestellte Audiosignal mit einem Pegel von der Halteeinrichtung (118) her in dem Fall ersetzt, dass der ermittelte Störungspegel den Schwellwertpegel überschreitet.

8. Anordnung nach Anspruch 7, wobei die Störungskompensationseinrichtung (97', 98') eine Stummsteuereinrichtung (119), welche die in dem wiederhergestellten Audiosignal (SL', SR') enthaltene Störung stumm steuert, und eine Auswahleinrichtung (121) aufweist, die entsprechend der Dauer, während der der ermittelte Störungspegel den Schwellwertpegel überschreitet, die Halteeinrichtung (118) so lange ansteuert, wie die betreffende Dauer kürzer ist als eine bestimmte Zeitspanne, und die die Stummsteuereinrichtung (119) in dem Fall ansteuert, dass die betreffende Dauer die bestimmte Zeitspanne überschreitet.

9. Anordnung nach Anspruch 6, wobei die Störungskompensationseinrichtung (97', 98') eine Stummsteuereinrichtung (119), die so betrieben wird, dass die in dem wiederhergestellten Audiosignal (SL', SR') enthaltene Störung stumm gesteuert wird, und eine Einrichtung (120) umfasst, welche den Betrieb der Stummsteuereinrichtung (119) jeweils dann bewirkt, wenn der ermittelte Störungspegel den Schwellwertpegel überschreitet.

10. Anordnung nach Anspruch 8 oder 9, wobei die Stummsteuereinrichtung (119) eine einen bestimmten Signalpegel liefernde Signalquelle (96) enthält, deren Signalpegel zum Ersatz des wiederhergestellten Audiosignals (SL', SR') auf die Inbetriebsetzung der Stummsteuereinrichtung hin ausgenutzt wird.

11. Anordnung nach einem der Ansprüche 6 bis 10, wobei die Einrichtung zu Ermittelung des Störungspegels eine Hochpassfiltereinrichtung (111, 112), welche an einem Ausgang der Kombinationseinrichtung (72, 74) angeschlossen ist und welche eine oberhalb einer oberen Grenze des Audiobandes liegende Grenzfrequenz aufweist, so dass lediglich eine hochfrequente Störung weitergeleitet wird, eine Einrichtung (113, 114) zur Ermittelung des Pegels der hochfrequenten Störung und eine Komparatoreinrichtung (115, 116) aufweist, welche den ermittelten Pegel der hochfrequenten Störung mit dem Schwellwertpegel vergleicht und entsprechend die Störungskompensationseinrichtung (97, 98; 97', 98') betätigt.

12. Anordnung nach einem der vorhergehenden Ansprüche, umfassend eine Aussetzer-Kompensationseinrichtung (75, 76), die auf in zumindest Teilen der wiedergegebenen gemischten Signale beliebig ermittelte Aussetzer hin entsprechende Korrekturen in dem wiederhergestellten Audiosignal (SL', SR') vornimmt.

13. Anordnung nach Anspruch 12, wobei die Aussetzer-Kompensationseinrichtung eine Einrichtung (85, 86) umfasst, welche die beliebig auftretenden Aussetzer in den FM-Audiosignalen ermittelt, die aus den wiedergegebenen gemischten Signalen abgetrennt sind.

14. Anordnung nach einem der vorhergehenden Ansprüche, wobei die Kopfeinrichtung erste und zweite Köpfe (42', 43') aufweist, die so angeordnet sind, dass sie sich abwechselnd über das Aufzeichnungsband (T) mit der Teilbildperiode des Videosignals (V) bewegen, mit einer Einrichtung zur Abgabe eines Steuersignals (Q) in Synchronismus mit der abwechselnden Bewegung der Köpfe (42', 43') zum Zwecke der Identifizierung, welcher der beiden Köpfe (42', 43') eine Spur auf dem Band abtastet, und wobei die Einrichtung zur Beseitigung der Störung aus dem wiederhergestellten Audiosignal eine Einrichtung (100, 101, 102), welche auf das Steuersignal (Q) in dem anderen Wiedergabebetrieb hin das Störungsunterdrückungssignal (W₁) erzeugt, das zu Beginn und am Ende der Bewegung des jeweiligen Kopfes über das Band einen Betriebspegel aufweist, und eine Einrichtung (97, 98) aufweist, die auf den betreffenden Betriebspegel des Störungsunterdrückungssignals (W₁) hin die Störung in dem wiederhergestellten Audiosignal (SL', SR') unterdrückt.

**Revendications**

1. Appareil de reproduction de signaux vidéo et audio enregistrés sous la forme de premier et de second signaux mélangés (M₁, M₂) dans des premières et secondes pistes d'enregistrement parallèles respectives (t₁, t₂), adjacentes, successives et alternées, qui s'étendent en oblique sur une bande d'enregistrement magnétique (T), les premier et second signaux mélangés (M₁, M₂) comprenant des porteuses respectives de fréquences différentes qui sont modulées en fréquence par au moins un signal audio (SL, SR), pour constituer des signaux audio MF respectifs (LF₁, LF₂, RF₃, RF₄) mélangés avec un signal vidéo V), l'appareil comprenant:

des moyens à têtes magnétiques qui effectuent un balayage suivant pratiquement des premières et des secondes pistes adjacentes parmi les pistes d'enregistrement (t₁, t₂), en succession, pour reproduire alternativement à partir de ces pistes les premier et second signaux mélangés M₁, M₂), pendant que la bande (T) est entraînée à une vitesse normale dans un mode de reproduction normal de l'appareil, les moyens à têtes balayant imparfaitement les pistes d'enregistrement (t₁, t₂) dans un autre mode de reproduction de l'appareil dans lequel la bande (T) est entraînée à une vitesse autre que la vitesse normale, ce qui fait que les signaux mélangés (M₁, M₂) sont reproduits avec du bruit, en particulier lorsque les moyens à têtes sont situés à des positions adjacentes à des parties d'extrémité des pistes d'enregistrement qui sont balayées imparfaitement par les têtes,

des moyens (56, 57, 58, 59) destinés à séparer les signaux audio MF (LF₁, LF₂, RF₃, RF₄) à partir des signaux mélangés reproduits respectifs (M₁, M₂),

des moyens de démodulation de fréquence (64, 65, 66, 67) destinés à recevoir les signaux audio MF séparés à partir des signaux mélangés reproduits, et à démoduler à partir de ces signaux des parties respectives reproduites en alternance (SL₁, SL₂, SR₁, SR₂) du signal audio,

des moyens de combinaison (72, 74) destinés à combiner séquentiellement les parties reproduites en alternance (SL₁, SL₂, SR₁, SR₂) du signal audio, pour former un signal audio reconstitué (SL', R'), et

des moyens destinés à supprimer dans le signal audio reconstitué (SL', SR') le bruit qui est reproduit avec les signaux mélangés (M₁, M₂) dans l'autre mode de reproduction.

2. Appareil selon la revendication 1, dans lequel les moyens destinés à supprimer le bruit dans l'autre mode de reproduction sont mis en fonction lorsque les moyens à têtes magnétiques sont situés dans des positions adjacentes à des parties d'extrémité des pistes d'enregistrement qui sont balayées imparfaitement par ces moyens.

3. Appareil selon la revendication 1, dans lequel les moyens destinés à supprimer le bruit dans l'autre mode de reproduction comprennent des moyens de silencieux qui sont mis en fonction pour empêcher l'audition du signal audio reconstitué (SL', SR') lorsque les moyens à têtes magnétiques sont situés dans des positions adjacentes à des parties d'extrémité des pistes d'enregistrement qui sont balayées imparfaitement dans l'autre mode de reproduction.

4. Appareil selon la revendication 1, dans lequel les moyens destinés à supprimer le bruit dans l'autre mode de reproduction comprennent des moyens (94) destinés à bloquer des niveaux du signal audio reconstitué (SL', SR'), et des moyens (94) destinés à remplacer le signal audio reconstitué par un niveau bloqué de ce signal, lorsque les moyens à têtes magnétiques sont situés dans des positions adjacentes à des parties d'extrémité des pistes d'enregistrement, qui sont balayées imparfaitement dans l'autre mode de reproduction.

5. Appareil selon la revendication 1, dans lequel les moyens destinés à supprimer le bruit dans l'autre mode de reproduction comprennent des moyens (96) destinés à établir un niveau de signal prédéterminé, et des moyens (95) destinés à remplacer le signal audio reconstitué (SL', SR') par le niveau de signal prédéterminé, lorsque les moyens à têtes magnétiques sont situés dans des positions adjacentes à des parties d'extrémité des pistes d'enregistrement qui sont balayées imparfaitement dans l'autre mode de reproduction.

6. Appareil selon la revendication 1, dans lequel les moyens destinés à supprimer le bruit dans l'autre mode de reproduction comprennent des moyens destinés à détecter un niveau de bruit dans le signal audio reconstitué (SL', SR'), et des moyens de compensation de bruit (97, 98; 97', 98') qui sont mis en fonction chaque fois que le niveau de bruit détecté dépasse un niveau de seuil prédéterminé.

7. Appareil selon la revendication 6, dans lequel les moyens de compensation de bruit (97', 98') comprennent des moyens de blocage (118) destinés à bloquer des niveaux du signal audio reconstitué (SL', SR'), et des moyens (91) destinés à remplacer le signal audio reconstitué par un niveau provenant des moyens de blocage (118), lorsque le niveau de bruit détecté dépasse le niveau de seuil.

8. Appareil selon la revendication 7, dans lequel les moyens de compensation de bruit (97', 98') comprennent des moyens de silencieux (119) destinés à rendre inaudible le bruit contenu dans le signal audio reconstitué (SL', SR'), et des moyens de sélection (121) qui réagissent à la durée pendant laquelle le niveau de bruit détecté dépasse le niveau de seuil, en actionnant les moyens de blocage (118) tant que la durée est inférieure à la durée prédéterminée, et en actionnant les moyens de silencieux (119) lorsque la durée dépasse la durée prédéterminée.

9. Appareil selon la revendication 6, dans lequel les moyens de compensation de bruit (97', 98') comprennent des moyens de silencieux (119) qui agissent de façon à rendre inaudible le bruit contenu dans le signal audio reconstitué (SL', SR'), et des moyens (120) qui mettent en fonction les moyens de silencieux (119) chaque fois que le niveau de bruit détecté dépasse le niveau de seuil.

10. Appareil selon la revendication 8 ou 9, dans lequel les moyens de silencieux (119) comprennent une source (96) d'un niveau de signal prédéterminé qu'on utilise pour remplacer le signal audio reconstitué (SL', SR'), au moment du fonctionnement des moyens de silencieux.

11. Appareil selon l'une quelconque des revendications 6 à 10, dans lequel les moyens destinés à détecter le niveau de bruit comprennent des moyens de filtrage passe-haut (111, 112) connectés à une sortie des moyens de combinaison (72, 74) et ayant une fréquence de coupure supérieure à une limite supérieure de la bande audio, de façon à ne transmettre que du bruit de fréquence élevée, des moyens (113, 114) destinés à détecter le niveau du bruit de fréquence élevée, et des moyens comparateurs (115, 116) destinés à comparer le niveau détecté du bruit de fréquence élevée avec le niveau de seuil, et à actionner de façon correspondante les moyens de compensation de bruit (97, 98; 97', 98').

12. Appareil selon l'une quelconque des revendications précédentes, comprenant des moyens de compensation de pertes de signal (75, 76) qui réagissent à des pertes de signal détectées de façon aléatoire dans certaines parties au moins des signaux mélangés reproduits, de façon à apporter des corrections correspondantes dans le signal audio reconstitué (SL', SR').

13. Appareil selon la revendication 12, dans lequel les moyens de compensation de pertes de signal comprennent des moyens (85, 86) destinés à détecter les pertes de signal de façon aléatoire dans les signaux audio MF qui sont séparés des signaux mélangés reproduits.

14. Appareil selon l'une quelconque des revendications précédentes, dans lequel les moyens à têtes comprennent des première et seconde têtes (42', 43'), disposées de façon à parcourir en alternance la bande d'enregistrement (T) à la période de trame du signal vidéo (V),

l'appareil comprend des moyens destinés à produire un signal de commande (Q) en synchronisme avec le mouvement alterné des têtes (42', 43'), pour identifier laquelle des première et seconde têtes (42', 43') est en train de balayer une piste sur la bande, et

les moyens destinés à supprimer le bruit dans le signal audio reconstitué comprennent des moyens (100, 101, 102) destinés à produire un signal d'atténuation de bruit ($W_1$) sous la dépendance du signal de commande (Q) dans l'autre mode de reproduction, le signal d'atténuation de bruit ($W_1$) ayant un niveau actif au début et à la fin du mouvement de chacune des têtes sur la bande, et des moyens (97, 98) destinés à atténuer le bruit dans le signal audio reconstitué sous l'effet du niveau actif du signal d'atténuation de bruit ($W_1$).

FIG. 1 - a

0 084 449

FIG. 1-b 10

FIG. 2

FIG. 3

FIG. 4

FIG. 5

0 084 449

FIG. 6

FIG. 14A

FIG. 14B

FIG. 14C

FIG. 14D

FIG. 14E

FIG. 14F

FIG. 14G

FIG. 7-a

# FIG. 7-b

## FIG. 8

## FIG.9A
## FIG.9B
## FIG.9C
## FIG.9D
## FIG.9E
## FIG.9F
## FIG.9G

*FIG. IOA*

75,76(97,98)

91

92

94

93

W(W₁)

*FIG. IOB*

75,76(97,98)

95

96

W(W₁)

42'

*FIG. 12*

43'      142

*FIG. 13*

t₁      t₂      a      t_L'

t_R'

43'

T

u₂

u₁

42'(142)      b

t_CTL

33

FIG. 11-a

LPF 68 → Y1

SL1

FREQ DEMOD 64

LIM 60

56 LF1

BPF

LPF 69 → Y2

(SL'1) 107 SL2

FREQ DEMOD 64'

FREQ DEMOD 65

109

LIM 60'

LIM 61

56' LF1

58 LF2

BPF

BPF

105

10"

53 42' M1

54

104

142 M1

43' M2

S3

X5

X3 X4

X2

X1

1 field

Ts 4 fields

35

# FIG. 11-b

| FIG.11-a | FIG. 11-c |
|----------|-----------|
| FIG.11-b | |

FIG. 11-C

FIG. 11A

FIG. 15

FIG. 16